# EUROPEAN PATENT APPLICATION

(11) **EP 3 699 513 A1**
(43) Date of publication of application: **26.08.2020**
(21) Application number: 20158017.2
(22) Date of filing: 18.02.2020
(51) Int. Cl.: F25B 1/10, F25B 25/00, F25B 6/04

(54) **REFRIGERATION APPARATUS**

(30) Priority: 19.02.2019 JP 2019027758; 09.01.2020 JP 2020002027
(71) Applicant: Panasonic Intellectual Property Management Co., Ltd., Osaka-shi, Osaka 540-6207 (JP)
(72) Inventor: KOSUDA, Osamu, Osaka, 540-6207 (JP); MIHARA, Kazuhiko, Osaka, 540-6207 (JP); KIYA, Toyoaki, Osaka, 540-6207 (JP); KINJO, Kenji, Osaka, 540-6207 (JP); MURASHIMA, Yuichi, Osaka, 540-6207 (JP)
(74) Representative: Eisenführ Speiser

(57) **Abstract**

Provided is a refrigeration apparatus capable of being operated without causing insufficient cooling capacity even when a hot-water supply temperature is raised.

A refrigeration apparatus includes a compressor 11, an intercooler 23 that cools refrigerant discharged from a low-stage discharge port 13, a main gas cooler 24 that cools refrigerant discharged from a high-stage discharge port 15, and an auxiliary gas cooler 25 that cools the refrigerant passed through the main gas cooler 24, and a water pipe 40 is sequentially connected in series to the auxiliary gas cooler 25, the intercooler 23, and the main gas cooler 24.

## Description

### [TECHNICAL FIELD]

The present invention relates to a refrigeration apparatus, and more particularly to a refrigeration apparatus that can recover waste heat by hot water supply.

### [BACKGROUND]

Conventionally, a refrigeration apparatus has been widely used in which a refrigerator operates showcases such as many refrigerating showcases and cold storage showcases installed in large stores such as supermarkets.

In the related art, for example, a technique is disclosed as such a refrigeration apparatus in which a water pipe is connected in parallel to an intercooler and a gas cooler to which cooling water is supplied, heat exchange between refrigerant discharged from a low-stage compression mechanism and the cooling water supplied to the intercooler is performed in the intercooler, and heat exchange between refrigerant discharged from a high-stage compression mechanism and the cooling water supplied to the gas cooler is performed in the gas cooler (for example, see Patent Literature 1).

### [Citation List]

### [Patent Literature]

[Patent Literature 1]
Japanese Patent No. 4947197

### [SUMMARY]

### [Technical Problem]

In order to increase a hot-water supply temperature in the related art, it was necessary to reduce a flow rate of water flowing through the water pipe connected to the intercooler and the gas cooler. Accordingly, there were problems that heat exchange performance was deteriorated by reducing the water flow rate, insufficient heat radiation of the refrigerant was caused in the intercooler and the gas cooler, a refrigerant temperature at an outlet of the gas cooler was raised, and consequentially cooling capacity of the refrigeration apparatus become insufficient.

The present invention has been made in view of circumstances described above, and an object thereof is to provide a refrigeration apparatus that can be operated without causing insufficient cooling capacity even when a hot-water supply temperature is raised.

### [Solution to Problem]

In order to achieve the above object, the present invention provides a refrigeration apparatus in which refrigerant is cooled by heat exchange between the refrigerant and water, and a water passage of the water for cooling the refrigerant is connected by a water pipe, the refrigeration apparatus including: a compressor that compresses refrigerant suctioned from a low-stage suction port through an inlet of the refrigeration apparatus to discharge the refrigerant from a low-stage discharge port and compresses refrigerant suctioned from a high-stage suction port again to discharge the refrigerant from a high-stage discharge port; an intercooler that cools the refrigerant discharged from the low-stage discharge port; a main gas cooler that cools the refrigerant discharged from the high-stage discharge port; and an auxiliary gas cooler that cools the refrigerant passed through the main gas cooler, wherein the water pipe is sequentially connected in series to the auxiliary gas cooler, the intercooler, and the main gas cooler.

Accordingly, since the water supplied to the water pipe flows in the order of the auxiliary gas cooler, the intercooler, and the main gas cooler and thus the water sent to the auxiliary gas cooler is sequentially supplied to the auxiliary gas cooler, the intercooler, and the main gas cooler which are low in internal refrigerant temperature, heat exchange between the refrigerant and the water can be performed with high efficiency.

### [Advantageous Effects of Invention]

According to the present invention, since the heat exchange between the refrigerant and the water can be performed with high efficiency, even when a hot-water supply temperature is increased, the flow rate of water can be prevented from being reduced, the hot-water supply temperature can be increased. Since heat radiation of the refrigerant can be sufficiently generated in the intercooler and the gas coolers, the refrigerant temperature at the outlet of the refrigeration apparatus also lowers, and cooling capacity of the refrigeration apparatus can be maintained.

### [BRIEF DESCRIPTION OF THE DRAWINGS]

Fig. 1 is a circuit diagram of a refrigeration cycle of a refrigeration apparatus according to a first embodiment of the present invention.
Fig. 2 is a circuit diagram of a gas cooler unit according to a second embodiment.
Fig. 3 is a circuit diagram of a gas cooler unit according to a third embodiment.
Fig. 4 is a circuit diagram of a gas cooler unit according to a fourth embodiment.
Fig. 5 is a circuit diagram of a gas cooler unit according to a fifth embodiment.
Fig. 6 is a flowchart illustrating an operation of the according to the fifth embodiment.
Fig. 7 is a circuit diagram of a gas cooler unit according to a sixth embodiment.
Fig. 8 is a flowchart illustrating an operation of a refrigeration apparatus according to the sixth embodiment.
Fig. 9 is a flowchart illustrating an operation of a cooling capacity control A according to the sixth embodiment.
Fig. 10 is a flowchart illustrating an operation of hot-water supply temperature control according to the sixth embodiment.
Fig. 11 is a flowchart illustrating an operation of a cooling capacity control B according to the sixth embodiment.
Fig. 12 is a circuit diagram of a gas cooler unit according to a seventh embodiment.
Fig. 13 is a flowchart illustrating an operation of a refrigeration apparatus according to the seventh embodiment.
Fig. 14 is a flowchart illustrating an operation of a cooling capacity control A according to the seventh embodiment.
Fig. 15 is a flowchart illustrating an operation of hot-water supply temperature control according to the seventh embodiment.
Fig. 16 is a flowchart illustrating an operation of a cooling capacity control B according to the seventh embodiment.
Fig. 17 is a circuit diagram of a gas cooler unit according to an eighth embodiment.
Fig. 18 is a flowchart illustrating an operation of a refrigeration apparatus according to the eighth embodiment.
Fig. 19 is a flowchart illustrating an operation of a cooling capacity control A according to the eighth embodiment.
Fig. 20 is a flowchart illustrating an operation of hot-water supply temperature control according to the eighth embodiment.
Fig. 21 is a flowchart illustrating an operation of a cooling capacity control B according to the eighth embodiment

### [DETAILED DESCRIPTION]

A first invention provides a refrigeration apparatus in which refrigerant is cooled by heat exchange between the refrigerant and water, and a water passage of the water for cooling the refrigerant is connected by a water pipe, the refrigeration apparatus including: a compressor that compresses refrigerant suctioned from a low-stage suction port through an inlet of the refrigeration apparatus to discharge the refrigerant from a low-stage discharge port and compresses refrigerant suctioned from a high-stage suction port again to discharge the refrigerant from a high-stage discharge port; an intercooler that cools the refrigerant discharged from the low-stage discharge port; a main gas cooler that cools the refrigerant discharged from the high-stage discharge port; and an auxiliary gas cooler that cools the refrigerant passed through the main gas cooler, wherein the water pipe is sequentially connected in series to the auxiliary gas cooler, the intercooler, and the main gas cooler.

According to the first invention, since the water supplied to the water pipe flows in the order of the auxiliary gas cooler, the intercooler, and the main gas cooler and thus the water sent to the auxiliary gas cooler is sequentially supplied to the auxiliary gas cooler, the intercooler, and the main gas cooler which are low in internal refrigerant temperature, heat exchange between the refrigerant and the water can be performed with high efficiency. Therefore, even when a hot-water supply temperature is increased, the flow rate of water can be prevented from being reduced, the hot-water supply temperature can be increased. Since heat radiation of the refrigerant can be sufficiently generated in the intercooler and the gas coolers, the refrigerant temperature at the outlet of the refrigeration apparatus also lowers, and cooling capacity of the refrigeration apparatus can be maintained.

A second invention provides a refrigeration apparatus in which a branch portion is provided in a middle of the water pipe between the intercooler and the main gas cooler, and a joining portion is provided on the water pipe upstream of the auxiliary gas cooler, the refrigeration apparatus including: a main passage that branches at the branch portion and through which water is supplied to the main gas cooler; a main gas cooler bypass passage that branches at the branch portion and through which water flowing by bypassing the main gas cooler joins the joining portion after passing through an external heat radiation apparatus; and a flow rate regulating mechanism that regulates a flow rate of water flowing through the main passage and the main gas cooler bypass passage.

According to the second invention, some of the water passed through the intercooler flow to the main gas cooler bypass passage by the flow rate regulating mechanism, and thus the amount of heat exchange between the refrigerant and the water in the main gas cooler can be regulated and the hot-water supply temperature can be regulated. In addition, even when the water flow rate in the main passage is necessary to be regulated in order to raise a hot-water supply temperature, since excess water is sent to the external heat radiation apparatus through the main gas cooler bypass passage via the flow rate regulating mechanism and the water radiated by the external heat radiation apparatus returns to the water pipe on the upstream of the auxiliary gas cooler, sufficient heat exchange between the refrigerant and the water can be performed in the auxiliary gas cooler without increasing the temperature of the water on the upstream of the auxiliary gas cooler. As a result, insufficient heat radiation of the refrigerant does not occur, the refrigerant temperature at the outlet of the refrigeration apparatus also lowers, and the cooling capacity of the refrigeration apparatus can be maintained.

A third invention provides a refrigeration apparatus in which a second branch portion is provided on the water pipe downstream of the main gas cooler, and a second joining portion is provided on the main gas cooler bypass passage upstream of the external heat radiation apparatus, the refrigeration apparatus including: a first bypass passage that branches at the second branch portion and through which water joining the second joining portion flows; a hot-water supply passage that branches at the second branch portion and through which hot water is supplied; a first bypass control valve that is provided on the first bypass passage to control a flow rate of water flowing through the first bypass passage; and a hot-water supply control valve that is provided on the hot-water supply passage to control a flow rate of water flowing through the hot-water supply passage.

According to the third invention, by regulating the water flow rate through the main gas cooler bypass passage and the first bypass passage, it is possible to regulate the amount of water, which returns to the water pipe on the upstream of the auxiliary gas cooler via the external heat radiation apparatus, out of the water flowing through the water pipe, and since the water passed through the main gas cooler and heat-exchanged can also be sent to the external heat radiation apparatus, the larger heat transfer area between the refrigerant and the water is secured than in the second invention and the refrigeration apparatus can be operated with higher efficiency.

Since the refrigerant temperature at the outlet of the refrigeration apparatus can be lowered, the refrigeration apparatus can be operated without causing insufficient cooling capacity even when the hot-water supply temperature is raised.

Further, even when the hot-water supply temperature is raised and the water flow rate in the hot-water supply passage needs to be regulated, the refrigeration apparatus can be continuously operated by flowing of the water through the first bypass passage and continuous heat radiation to the outside with the external heat radiation apparatus.

A fourth invention provides a refrigeration apparatus in which a third branch portion is provided on the water pipe between the auxiliary gas cooler and the intercooler, and a third joining portion is provided upstream of the external heat radiation apparatus on the main gas cooler bypass passage, the refrigeration apparatus including: a second bypass passage that branches at the third branch portion and through which water joining the third joining portion flows; and a second bypass control valve that is provided on the second bypass passage to control a flow rate of water flowing through the second bypass passage.

According to the fourth invention, the water flow rate through the respective auxiliary gas cooler, the intercooler, and the main gas cooler can be individually regulated by the regulation of the flow rate regulating mechanism and the second bypass control valve. For this reason, since the operating conditions of the refrigeration cycle can also be regulated by the regulation of the flow rate of the individual water, the refrigeration apparatus can be operated with higher efficiency.

Since the refrigerant temperature at the outlet of the refrigeration apparatus can be lowered, the refrigeration apparatus can be operated without causing insufficient cooling capacity even when the hot-water supply temperature is raised.

Further, even when the hot-water supply temperature is raised and the water flow rate in the main passage needs to be regulated, the refrigeration apparatus can be continuously operated by flowing of the water through the second bypass passage and continuous heat radiation to the outside with the external heat radiation apparatus.

A fifth invention provides a refrigeration apparatus in which a fourth branch portion is provided on the water pipe between the auxiliary gas cooler and the intercooler, and a fourth joining portion is provided on the water pipe upstream of the auxiliary gas cooler, the refrigeration apparatus including: a fourth bypass passage that branches at the fourth branch portion and through which branched water joins the fourth joining portion after passing through the external heat radiation apparatus; and a fourth bypass control valve that is provided on the fourth bypass passage to control a flow rate of water flowing through the fourth bypass passage.

According to the fifth invention, the water flow rate through the intercooler and the main gas cooler can be individually controlled separately from the water flow rate through the auxiliary gas cooler by the control of the fourth bypass control valve. For this reason, the cooling capacity of the refrigeration apparatus can be regulated by the control of the water flow rate through the auxiliary gas cooler and the hot-water supply temperature can also be regulated by the control of the water flow rate through the main gas cooler.

A sixth invention provides a refrigeration apparatus in which a fifth branch portion is provided downstream of the main gas cooler, and a fifth joining portion is provided upstream of the fourth bypass passage from the external heat radiation apparatus, the refrigeration apparatus including: a fifth bypass passage that branches at the fifth branch portion and through which water joining the fifth joining portion flows; and a fifth bypass control valve that is provided on the fifth bypass passage to control a flow rate of water flowing through the fifth bypass passage.

According to the sixth invention, the water flow rate through the fifth bypass passage can be controlled by the control of the opening degree of the fifth bypass control valve. Thereby, the water returns to the external heat radiation apparatus on the downstream of the main gas cooler, thereby heat not used for the hot water supply can also be radiated by the external heat radiation apparatus, and the heat is continuously radiated to the outside, thereby the refrigeration apparatus can be continuously operated.

A seventh invention provides a refrigeration apparatus in which a sixth branch portion is provided on the water pipe between the auxiliary gas cooler and the intercooler, and a sixth joining portion is provided on the water pipe between the intercooler and the main gas cooler, the refrigeration apparatus including: a sixth bypass passage that branches at the sixth branch portion and through which water joining the sixth joining portion flows; and a sixth bypass control valve that is provided on the sixth bypass passage to control a flow rate of water flowing through the sixth bypass passage.

According to the seventh invention, the water flow rate through the sixth bypass passage from the auxiliary gas cooler can be controlled by the control of the opening degree of the sixth bypass control valve. Thus, when the water flow rate through the water passage of the gas cooler unit including the intercooler, the main gas cooler, and the auxiliary gas cooler as a unit increases, the water flows to the main gas cooler by bypassing the intercooler, and thus pressure loss in the water passage of the gas cooler unit can be reduced. In addition, since the pressure loss in the water passage can be reduced, the refrigeration apparatus can be operated in a state where an input of the water supply pump is small, and can be operated with high efficiency even when the hot-water supply temperature to be required changes and the setting of the flow rate changes to increase the water flow rate.

An eighth invention provides a refrigeration apparatus in which a seventh branch portion is provided on the water pipe between the auxiliary gas cooler and the intercooler, and a seventh joining portion is provided on the water pipe downstream of the main gas cooler, the refrigeration apparatus including: a seventh bypass passage that branches at the seventh branch portion and through which water joining the seventh joining portion flows; and a seventh bypass control valve that is provided on the seventh bypass passage to control a flow rate of water flowing through the seventh bypass passage.

According to the eighth invention, the water flow rate through the seventh bypass passage from the auxiliary gas cooler can be controlled by the control of the opening degree of the seventh bypass control valve. Thus, when the water flow rate through the water pipe of the gas cooler unit increases, the water flows to the main gas cooler by bypassing the intercooler, and thus pressure loss in the water passage of the gas cooler unit can be reduced. In addition, since the pressure loss in the water passage can be reduced, the refrigeration apparatus can be operated in a state where an input of the water supply pump is small, and can be operated with high efficiency even when the hot-water supply temperature to be required changes and the setting of the flow rate changes to increase the water flow rate through the gas cooler unit.

A ninth invention provides a refrigeration apparatus further including: a hot-water supply temperature sensor that is provided on the water pipe downstream of the main gas cooler to detect a temperature of water for hot water supply; and a control unit that controls at least one of the flow rate regulating mechanism, the first bypass control valve, the fourth bypass control valve, and the fifth bypass control valve, based on a hot-water supply temperature detected by the hot-water supply temperature sensor, wherein the control unit controls a flow rate of water flowing through the main gas cooler based on the temperature detected by the hot-water supply temperature sensor and the set temperature for hot-water supply.

According to the ninth invention, based on the difference between the set temperature and the actual temperature of water, the water flow rate through the main passage can be controlled, and the hot-water supply temperature can be regulated. Further, the refrigerant temperature at the outlet of the refrigeration apparatus can also be lowered without causing insufficient heat radiation of the refrigerant in the intercooler, the main gas cooler, and the auxiliary gas cooler, and the refrigeration apparatus can be operated while maintaining the cooling capacity.

A tenth invention provides a refrigeration apparatus in which a water supply pump is provided on the water passage between the auxiliary gas cooler and the intercooler.

According to the tenth invention, since the water supply pump is located downstream of the auxiliary gas cooler, the temperature of the water entering the auxiliary gas cooler can be prevented from being raised due to the heat generated by the water supply pump, the temperature of the water entering the auxiliary gas cooler can be lowered, higher cooling capacity can be obtained, and the amount of heat generated by the water supply pump can be used for raising the temperature of the water.

An eleventh invention provides a refrigeration apparatus in which a water supply pump is provided on the water passage between the intercooler and the main gas cooler.

According to the eleventh invention, since the water supply pump is located in the water passage on the downstream of the auxiliary gas cooler, the temperature of the water entering the auxiliary gas cooler can be prevented from being raised due to the heat generated by the water supply pump, the temperature of the water entering the auxiliary gas cooler can be lowered, and higher cooling capacity can be obtained. Further, since the water supply pump is located downstream of the intercooler, the temperature of the water entering the intercooler can also be lowered, the intercooler can also cool the refrigerant at a lower temperature and can be operated under operation conditions with higher efficiency, and the amount of heat generated by the water supply pump can be used for raising the temperature of the water.

A twelfth invention provides a refrigeration apparatus in which a carbon dioxide is used as the refrigerant.

According to the twelfth invention, it is possible to switch between a hot-water supply mode in which high-temperature hot water supply can be performed and a refrigerating mode in which the efficiency of the refrigerator is emphasized by utilizing characteristics of the carbon dioxide and to further improve energy saving and environmental efficiency.

Embodiments of the present invention will be described below with reference to the drawings.

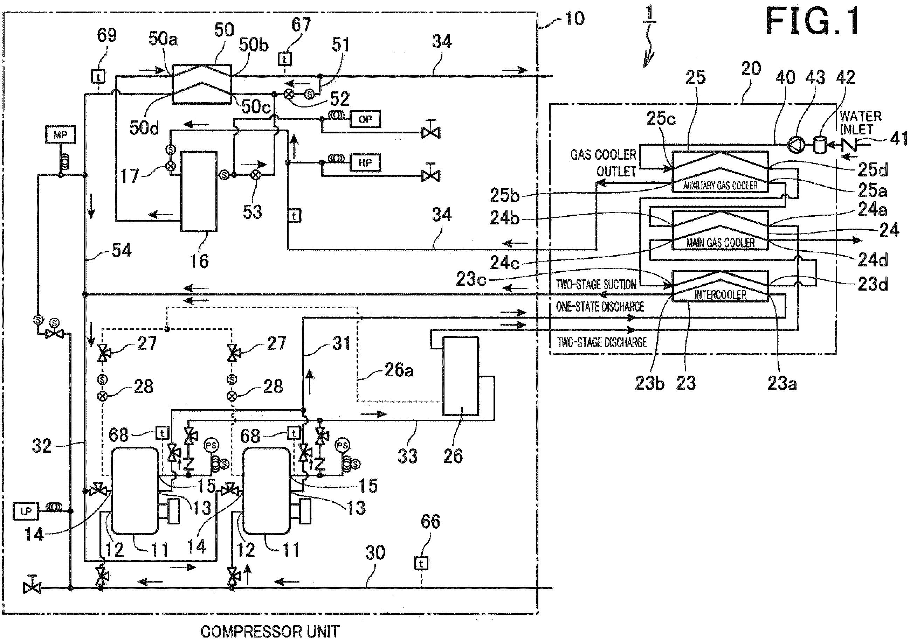

Fig. 1 is a circuit diagram of a refrigeration cycle according to a first embodiment of a refrigeration apparatus of the present invention.

As illustrated in Fig. 1, a refrigeration apparatus 1 is connected to a cooling device (not illustrate) to be cooled by refrigerant sent from the refrigeration apparatus 1, and the cooling device is, for example, a showcase that is installed in facilities such as convenience stores or supermarkets to cool chilled goods and frozen goods that are displayed.

In the present embodiment, the refrigeration apparatus 1 uses carbon dioxide having a high-pressure-side refrigerant pressure (high pressure) equal to or higher (supercritical) than a critical pressure as the refrigerant. Such a carbon dioxide is a natural refrigerant that is friendly to the global environment and takes into account flammability and toxicity.

The refrigeration apparatus 1 includes a compressor unit 10 and a gas cooler unit 20.

The compressor unit 10 includes two compressors 11 that are arranged in parallel. In the present embodiment, the compressor 11 is an internal intermediate pressure type two-stage compression rotary compressor including a two-stage compression mechanism.

The compressor 11 is provided with a low-stage suction port 12 and a low-stage discharge port 13 in the first-stage compression mechanism, and is provided with a high-stage suction port 14 and a high-stage discharge port 15 in the second-stage compression mechanism.

A low-pressure refrigerant pipe 30 connected to the cooling device is connected to the low-stage suction port 12, and a low-pressure refrigerant sent from the cooling device via the low-pressure refrigerant pipe 30 is sent from the low-stage suction port 12 to the first-stage compression mechanism.

The first-stage compression mechanism of the compressor 11 compresses a low-temperature and low-pressure refrigerant suctioned from the low-stage suction port 12, increases the pressure to an intermediate pressure, and discharges the refrigerant from the low-stage discharge port 13. The second-stage compression mechanism is configured to suction and compress the intermediate pressure refrigerant compressed by the first-stage compression mechanism from the high-stage suction port 14, to increase the refrigerant to a high pressure, and to discharge the refrigerant from the high-stage discharge port 15.

Intermediate-pressure discharge pipes 31 are connected to the low-stage discharge ports 13 of the compressors 11, respectively. The intermediate-pressure discharge pipes 31 of the two compressors 11 join on the way and are connected to the gas cooler unit 20.

The gas cooler unit 20 includes an intercooler 23, a main gas cooler 24, and an auxiliary gas cooler 25.

The intermediate-pressure discharge pipes 31 connected to the respective compressors 11 join on the way, and are connected to an inlet 23a of one passage of the intercooler 23.

An intermediate-pressure suction pipe 32 is connected to an outlet 23b of one passage of the intercooler 23, and the intermediate-pressure suction pipe 32 is connected to the high-stage suction ports 14 of the respective compressors 11.

In addition, a high-pressure discharge pipe 33 is connected to the high-stage discharge ports 15 of the respective compressors 11, and the high-pressure discharge pipe 33 joins on the way and is connected to an inlet 24a of one passage of the main gas cooler 24.

An oil separator 26 is provided in the middle of the high-pressure discharge pipe 33. The oil separator 26 is used to separate oil in the refrigerant, and the oil separator 26 is connected to an intermediate pressure section of the compressor 11 via an oil pipe 26a. An oil service valve 27 formed of a three-way valve and an oil regulating motor valve 28 are provided in a middle of the oil pipe 26a.

An inlet 25a of one passage of the auxiliary gas cooler 25 is connected to the outlet 24b of one passage of the main gas cooler 24 via a refrigerant pipe 34. An intermediate receiver 16 is connected to an outlet 25b of one passage of the auxiliary gas cooler 25 via the refrigerant pipe 34.

A water pipe 40 is connected to the other passage of the auxiliary gas cooler 25, the main gas cooler 24, and the intercooler 23.

The water pipe 40 is connected to an inlet 25c of the other passage of the auxiliary gas cooler 25, and is connected from an outlet 25d of the other passage of the auxiliary gas cooler 25 to an inlet 23c of the other passage of the intercooler 23. The water pipe 40 is connected from an outlet 23d of the other passage of the intercooler 23 to an inlet 24c of the other passage of the main gas cooler 24, and a hot water supply is performed from an outlet 24d of the other passage of the main gas cooler 24.

In the present embodiment as described above, the auxiliary gas cooler 25, the intercooler 23, and the main gas cooler 24 are connected in series. A water inlet for water supply is provided on an upstream of the auxiliary gas cooler 25, and a water supply check valve 41, a suction tank 42, and a water supply pump 43 are provided in this order from the water inlet.

Here, a back flow toward the water inlet is prevented by the water supply check valve 41, and the suction tank 42 is installed on the upstream of the water supply pump 43 to prevent the water supply pump 43 from drawing in air and prevent an unstable water supply of the pump, thereby water can stably flow onto a water passage.

In the middle of the refrigerant pipe 34 from the auxiliary gas cooler 25, a decompression motor valve 17 is provided to decompress the refrigerant sent from the auxiliary gas cooler 25.

An inlet 50a of a split heat exchanger 50 is connected to the refrigerant pipe 34 on an outlet of the intermediate receiver 16.

A branch pipe 51 branching from the refrigerant pipe 34 is connected to the refrigerant pipe 34 on an outlet 50b of the split heat exchanger 50, and the branch pipe 51 is connected to the other inlet 50c of the split heat exchanger 50 via a liquid return motor valve 52. The refrigerant pipe 34 and the branch pipe 51 are arranged so that a flow direction of the refrigerant is in a counterflow direction, and are configured to perform efficient heat exchange between the refrigerant flowing through the refrigerant pipe 34 and the refrigerant flowing through the branch pipe 51.

A refrigerant return pipe 54 is connected to the intermediate receiver 16 via a gas return motor valve 53, and the refrigerant return pipe 54 is connected to the branch pipe 51.

The refrigerant pipe 34 on the outlet 50b of the split heat exchanger 50 is connected to the cooling device.

The refrigerant return pipe 54 on an outlet 50d of the split heat exchanger 50 is connected to the outlet of the intercooler 23.

Then, the liquid return motor valve 52 decompresses the high-pressure refrigerant at the outlet 50b of the split heat exchanger 50 to expand the refrigerant to an intermediate-pressure level, and is configured to perform heat exchange between the high-pressure refrigerant flowing through the refrigerant pipe 34 and the decompressed refrigerant flowing through the branch pipe 51 using the split heat exchanger 50 to cool the high-pressure refrigerant.

The refrigerant heat-exchanged by the split heat exchanger 50 joins the refrigerant on the outlet of the intercooler 23 and is sent from the high-stage suction port 14 to the compressor 11 to optimize a temperature of the refrigerant discharged from the compressor 11.

A refrigerator inlet temperature sensor 66 is provided on an inlet pipe of the refrigerant pipe 34 in the compressor unit 1 to detect a temperature of the refrigerant sent from the cooling device, and a refrigerator outlet temperature sensor 67 is provided on an outlet pipe of the refrigerant pipe 34 in the compressor unit 1 to detect a temperature of the refrigerant sent to the cooling device.

A discharge temperature sensor 68 is provided on an outlet pipe of the compressor 11 to detect a discharge temperature of the refrigerant, and a split heat exchanger outlet temperature sensor 69 is provided on the outlet of the split heat exchanger 50 to detect a refrigerant temperature at the outlet of the split heat exchanger 50.

An operation of the first embodiment will be described below.

First, the refrigerant sent from the cooling device is suctioned through the low-stage suction port 12 of the compressor 11 by an operation of the compressor 11, and the suctioned refrigerant is compressed to an intermediate pressure by the first-stage compression mechanism and is discharged from the low-stage discharge port 13.

In addition, the refrigerant discharged from the low-stage discharge port 13 of the compressor 11 flows into the intercooler 23 through the intermediate-pressure discharge pipe 31. The inflow refrigerant is cooled by exchanging heat with water in the intercooler 23 and is returned to the high-stage suction port 14 of the compressor 11.

The refrigerant returned from the intercooler 23 is compressed by the second-stage compression mechanism in the compressor 11, and the compressed refrigerant is discharged from the high-stage discharge port 15 and passes through the oil separator 26, and is then sent to the main gas cooler 24.

The refrigerant sent from the compressor 11 exchanges heat in the auxiliary gas cooler 25 after exchanging heat with water in the main gas cooler 24, and is sent to the intermediate receiver 16.

The cooled refrigerant in the intermediate receiver 16 is sent to the split heat exchanger 50 and cooled by the refrigerant branched from the refrigerant pipe 34 and decompressed by the liquid return motor valve 52, and after that the cooled refrigerant is sent to the cooling device.

Then, the refrigerant sent to the cooling device is decompressed to a predetermined pressure by decompression means, and exchanges heat in an evaporator to cool the inside of the refrigerator to a predetermined temperature.

The refrigerant flowing out of the evaporator is returned to the compressor 11 through the low-pressure refrigerant pipe 30.

In the present embodiment, the water pipe 40 is sequentially connected in series to the auxiliary gas cooler 25, the intercooler 23, and the main gas cooler 24 in this order.

Therefore, water flowing through the water pipe 40 first flows to the auxiliary gas cooler 25, and then sequentially flows to the intercooler 23 and the main gas cooler 24.

Thus, the water sent from the water pipe 40 exchanges heat with the refrigerant in the auxiliary gas cooler 25 to rise in temperature, and then exchanges heat with the refrigerant in the intercooler 23 to further rise in temperature. Finally, the water can further rise in temperature in the main gas cooler 24.

On the other hand, the refrigerant discharged from the low-stage discharge port 13 of the compressor 11 is cooled by the intercooler 23, discharged from the high-stage discharge port 15 after being suctioned and compressed by the compressor 11 again, and flows through the main gas cooler 24. The refrigerant is cooled with water in the main gas cooler 24, and is then further cooled with water again in the auxiliary gas cooler 25.

In this way, the water supplied to the water pipe 40 is sequentially sent to the auxiliary gas cooler 25, the intercooler 23, and the main gas cooler 24 which are low in refrigerant temperature, thereby heat exchange between the refrigerant and the water can be performed with high efficiency.

Thus, even when a hot-water supply temperature is increased, the water flow rate can be prevented from being reduced, the hot-water supply temperature can be increased. Since heat radiation of the refrigerant can be sufficiently generated in the intercooler 23 and gas coolers 24 and 25, the refrigerant temperature at the outlet of the refrigeration apparatus 1 also makes low, and cooling capacity of the refrigeration apparatus 1 can be maintained.

Here, when a carbon dioxide is used, the hot water supply can be performed at a high temperature. However, when the hot water supply is performed at the high temperature, a temperature difference between a water temperature on the inlet of the water pipe 40 and a water temperature on the outlet is required to be increased, and the flow rate of water flowing through the auxiliary gas cooler 25, the intercooler 23, and the main gas cooler 24 is necessary to be reduced in the related art. For this reason, the heat radiation of the refrigerant is insufficient in the intercooler 23 and the main gas cooler 24, and heat exchange between the water flowing through the water pipe 40 and the refrigerant may not be sufficiently performed.

However, since the water sent from the water pipe 40 is sequentially heated by the auxiliary gas cooler 25, the intercooler 23, and the main gas cooler 24 in the present embodiment, sufficient heat exchange can be performed in the main gas cooler 24 and the auxiliary gas cooler 25 without reduction of the water flow rate through the water pipe 40 and the hot water supply can be performed at the high temperature.

As described above, according to the first embodiment, the refrigeration apparatus 1 includes: the compressor 11; the intercooler 23 that cools the refrigerant discharged from the low-stage discharge port 13; the main gas cooler 24 that cools the refrigerant discharged from the high-stage discharge port 15; and the auxiliary gas cooler 25 that cools the refrigerant passed through the main gas cooler 24, and the water pipe 40 is sequentially connected in series to the auxiliary gas cooler 25, the intercooler 23, and the main gas cooler 24 in this order.

Thus, the water supplied to the water pipe 40 is sequentially sent to the auxiliary gas cooler 25, the intercooler 23, and the main gas cooler 24 which are low in refrigerant temperature, thereby the heat exchange between the refrigerant and the water can be performed with high efficiency. Therefore, even when the hot-water supply temperature is increased, the flow rate of water can be prevented from being reduced. Since the heat radiation of the refrigerant can be sufficiently generated in the intercooler 23 and the gas cooler, the refrigerant temperature at the outlet of the refrigeration apparatus 1 also makes low, and the cooling capacity of the refrigeration apparatus 1 can be maintained.

In the present embodiment, the carbon dioxide is used as the refrigerant.

Thus, it is possible to switch between a hot-water supply mode in which high-temperature hot water supply can be performed and a refrigerating mode in which the efficiency of the refrigerator is emphasized by utilizing characteristics of the carbon dioxide and to further improve energy saving and environmental efficiency.

A second embodiment of the present invention will be described below.

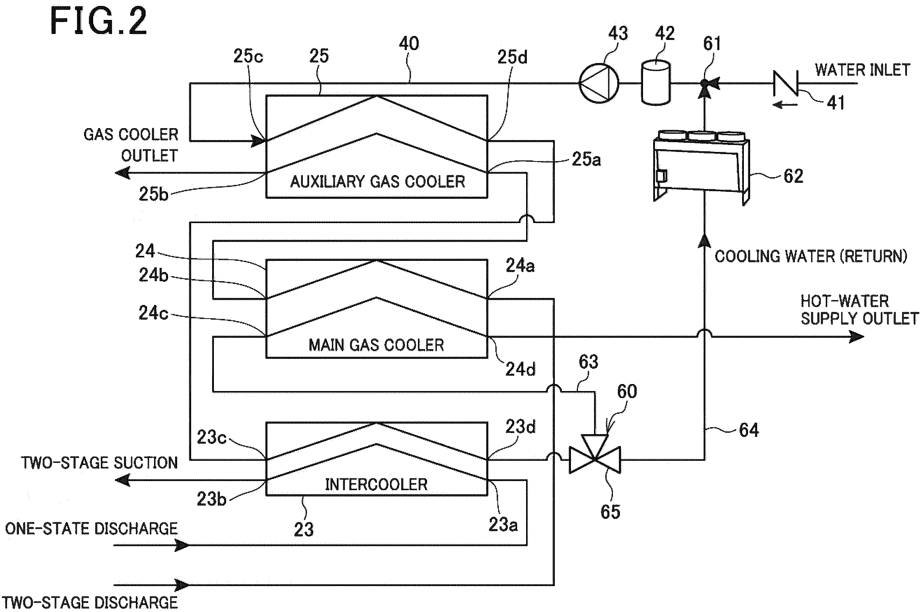

Fig. 2 is a circuit diagram of a gas cooler unit 20 according to the second embodiment of the present invention.

In the present embodiment, a branch portion 60 is provided in the middle of a water pipe 40 between an intercooler 23 and a main gas cooler 24. In addition, a joining portion 61 is provided on a water pipe 40 on an upstream of an auxiliary gas cooler 25.

The branch portion 60 branches into a main passage 63 through which water is supplied from the intercooler 23 to the main gas cooler 24 and a main gas cooler bypass passage 64 through which the water bypasses the main gas cooler 24 from the intercooler 23, passes through an external heat radiation apparatus 62, and then joins the joining portion 61.

The external heat radiation apparatus 62 is, for example, a cooling tower that cools cooling water with air or a water cooling-type heat exchanger that cools the water with cooling water in another passage.

In the present embodiment, the branch portion 60 is formed of, for example, a three-way valve, and the branch portion 60 is configured to function as a flow rate regulating mechanism 65 that is capable of regulating the flow rate of water flowing through the main passage 63 and the main gas cooler bypass passage 64.

Here, the flow rate regulating mechanism 65 does not need to be installed in the branch portion 60, and control valves capable of regulating the flow rate may be respectively installed in the main passage 63 and the main gas cooler bypass passage 64, thereby the flow rate can be regulated.

Since other configurations are the same as those in the first embodiment, the same portions are denoted by the same reference numerals and the description thereof will not be presented.

An operation of the second embodiment will be described below.

In the present embodiment, the flow rate regulating mechanism 65 of the branch portion 60 regulates the water flow rate through the intercooler 23, and regulates the water flow rate through the main passage 63 or the main gas cooler bypass passage 64.

Some or all of the water passed through the intercooler 23 pass through the external heat radiation apparatus 62 through the main gas cooler bypass passage 64, and then returns to the joining portion 61 on the upstream of the auxiliary gas cooler 25.

As described above, some of the water passed through the intercooler 23 flow to the main gas cooler bypass passage 64 by the flow rate regulating mechanism 65, and thus the amount of heat exchange between the refrigerant and the water in the main gas cooler 24 can be regulated and the hot-water supply temperature can be regulated.

Then, even when the water flow rate through the main passage 63 is necessary to be regulated in order to raise a hot-water supply temperature, since excess water is sent to the external heat radiation apparatus 62 through the main gas cooler bypass passage 64 via the flow rate regulating mechanism 65 and the water radiated by the external heat radiation apparatus 62 returns to the joining portion 61 on the upstream of the auxiliary gas cooler 25, sufficient heat exchange between the refrigerant and the water can be performed in the auxiliary gas cooler 25. As a result, insufficient heat radiation of the refrigerant does not occur, the refrigerant temperature at the outlet of the refrigeration apparatus 1 also lowers, and the cooling capacity of the refrigeration apparatus 1 can be maintained.

In the second embodiment, as described above, the branch portion 60 is provided in the middle of the water pipe 40 between the intercooler 23 and the main gas cooler 24, the joining portion 61 is provided on the water pipe 40 on the upstream of the auxiliary gas cooler 25, and the refrigeration apparatus 1 includes the main passage 63 that branches at the branch portion 60 and through which the water is supplied to the main gas cooler 24, the main gas cooler bypass passage 64 that branches at the branch portion 60 and through which the water flowing by bypassing the main gas cooler 24 joins the joining portion 61 after passing through the external heat radiation apparatus 62, and the flow rate regulating mechanism 65 that regulates the water flow rate through the main passage 63 and the main gas cooler bypass passage 64.

Thus, some of the water passed through the intercooler 23 flow to the main gas cooler bypass passage 64 by the flow rate regulating mechanism 65, and thus the amount of heat exchange between the refrigerant and the water in the main gas cooler 24 can be regulated and the hot-water supply temperature can be regulated. In addition, even when the water flow rate through the main passage 63 is necessary to be regulated in order to raise a hot-water supply temperature, since excess water is sent to the external heat radiation apparatus 62 through the main gas cooler bypass passage 64 via the flow rate regulating mechanism 65 and the water radiated by the external heat radiation apparatus 62 returns to the water pipe 40 on the upstream of the auxiliary gas cooler 25, sufficient heat exchange between the refrigerant and the water can be performed in the auxiliary gas cooler 25. As a result, insufficient heat radiation of the refrigerant does not occur, the refrigerant temperature at the outlet of the refrigeration apparatus 1 also lowers, and the cooling capacity of the refrigeration apparatus 1 can be maintained.

A third embodiment of the present invention will be described below.

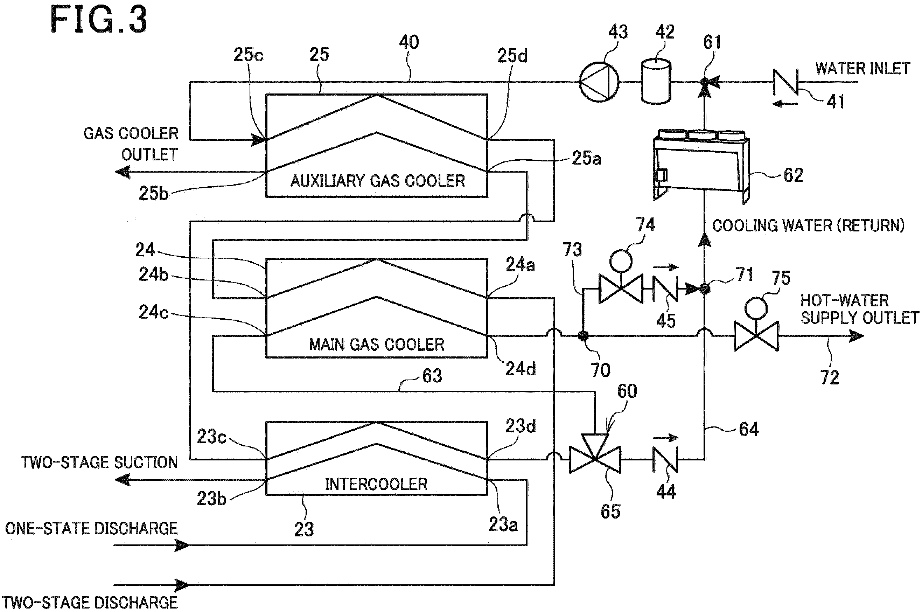

Fig. 3 is a circuit diagram of a gas cooler unit 20 according to the third embodiment of the present invention.

In the present embodiment, a second branch portion 70 is provided on a water pipe 40 on a downstream of the main gas cooler 24. Further, a second joining portion 71 is provided upstream of the external heat radiation apparatus 62 on the main gas cooler bypass passage 64.

One side of the water pipe 40 branching at the second branch portion 70 becomes a hot-water supply passage 72 through which hot water is supplied, and the other side of the water pipe 40 becomes a first bypass passage 73 that branches at the second branch portion 70 and through which the water joining the second joining portion 71 flows.

A first bypass control valve 74 is provided in the middle of the first bypass passage 73 to control the water flow rate through the first bypass passage 73. In addition, a hot-water supply control valve 75 is provided in the middle of the hot-water supply passage 72 to control the water flow rate through the hot-water supply passage 72.

A check valve 44 for the main gas cooler bypass passage is provided on the main gas cooler bypass passage 64, and a check valve 45 for the first bypass passage is provided on the first bypass passage 73.

The second branch portion 70 is connected to the water pipe 40 in the present embodiment, but a three-way valve may be installed in the second branch portion 70 as the first bypass control valve 74 that controls the water flow rate through the first bypass passage 73, and the water flow rate through the first bypass passage 74 may be regulated by the three-way valve.

Since other configurations are the same as those in the first and second embodiments, the same portions are denoted by the same reference numerals and the description thereof will not be presented.

An operation of the third embodiment will be described below.

In the present embodiment as in the second embodiment, the flow rate regulating mechanism 65 of the branch portion 60 regulates the water flow rate through the intercooler 23, and regulates the water flow rate through the main passage 63 or the main gas cooler bypass passage 64.

Thus, some or all of the water passed through the intercooler 23 pass through the external heat radiation apparatus 62 through the main gas cooler bypass passage 64, and then returns to the joining portion 61 on the upstream of the auxiliary gas cooler 25.

In addition, the water flow rate through the first bypass passage 73 is controlled by control of an opening degree of the first bypass control valve 74 and an opening degree of the hot-water supply control valve 75, and some or all of water passed through the main gas cooler 24 pass through the external heat radiation apparatus 62 via the first bypass passage 73 and then return to the joining portion 61 on the upstream of the auxiliary gas cooler 25.

By regulating the water flow rate through the main gas cooler bypass passage 64 and the first bypass passage 73, it is possible to regulate the amount of water, which returns to the joining portion 61 on the upstream of the auxiliary gas cooler 25 via the external heat radiation apparatus 62, out of the water flowing through the water pipe 40.

Since the water passed through the main gas cooler 24 and heat-exchanged can also be sent to the external heat radiation apparatus 62, a larger heat transfer area between the refrigerant and the water is secured than in the second embodiment and the refrigeration apparatus 1 can be operated with higher efficiency.

In the third embodiment, as described above, the second branch portion 70 is provided on the water pipe 40 on the downstream of the main gas cooler 24, the second joining portion 71 is provided on the main gas cooler bypass passage 64 on the upstream of the external heat radiation apparatus 62, and the refrigeration apparatus 1 includes the first bypass passage 73 that branches at the second branch portion 70 and through which the water joining the second joining portion 71 flows, the hot-water supply passage 72 that branches at the second branch portion 70 and through which the hot water is supplied, the first bypass control valve 74 that is provided on the first bypass passage 73 to control the water flow rate through the first bypass passage 73, and the hot-water supply control valve 75 that is provided on the hot-water supply passage 72 to control the water flow rate through the hot-water supply passage 72.

Thus, by regulating the water flow rate through the main gas cooler bypass passage 64 and the first bypass passage 73, it is possible to regulate the amount of water, which returns to the joining portion 61 on the upstream of the auxiliary gas cooler 25 via the external heat radiation apparatus 62, out of the water flowing through the water pipe 40, and since the water passed through the main gas cooler 24 and heat-exchanged can also be sent to the external heat radiation apparatus 62, the larger heat transfer area between the refrigerant and the water is secured than in the second embodiment and the refrigeration apparatus 1 can be operated with higher efficiency.

Since the refrigerant temperature at the outlet of the refrigeration apparatus 1 can be lowered, the refrigeration apparatus 1 can be operated without causing insufficient cooling capacity even when the hot-water supply temperature is raised.

Further, even when the hot-water supply temperature is raised and the water flow rate through the hot-water supply passage 72 needs to be regulated, the refrigeration apparatus 1 can be continuously operated by flowing of the water through the first bypass passage 73 and continuous heat radiation to the outside.

A fourth embodiment of the present invention will be described below.

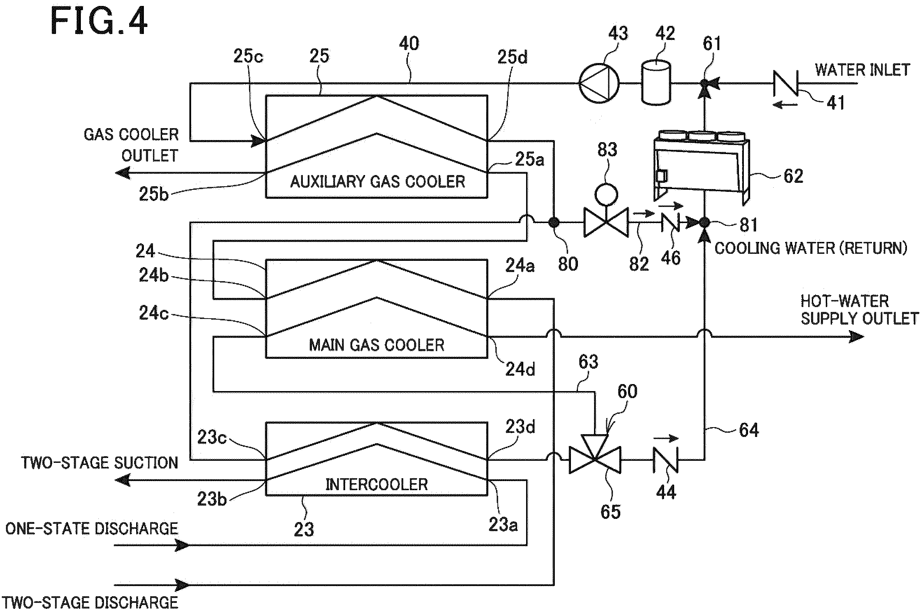

Fig. 4 is a circuit diagram of a gas cooler unit 20 according to the fourth embodiment of the present invention.

In the present embodiment, a third branch portion 80 is provided on a water pipe 40 between an auxiliary gas cooler 25 and an intercooler 23. In addition, a third joining portion 81 is provided upstream of the external heat radiation apparatus 62 on the main gas cooler bypass passage 64.

A second bypass passage 82, which branches at the third branch portion 80 and through which water joining the third joining portion 81 flows, is connected to the third branch portion 80, and a second bypass control valve 83 is provided in the middle of the second bypass passage 82 to control a flow rate of water flowing through the second bypass passage 82.

Further, a check valve 46 for the second bypass passage is provided on the second bypass passage 83.

The third branch portion 80 is connected to the water pipe 40 in the present embodiment, but a three-way valve may be installed in the third branch portion 80 as the second bypass control valve 83 that controls the water flow rate through the second bypass passage 82, and the water flow rate through the second bypass passage 82 may be regulated by the three-way valve.

Since other configurations are the same as those in the first and second embodiments, the same portions are denoted by the same reference numerals and the description thereof will not be presented.

An operation of the fourth embodiment will be described below.

In the present embodiment as in the second embodiment, the flow rate regulating mechanism 65 of the branch portion 60 regulates the water flow rate through the intercooler 23, and regulates the water flow rate through the main passage 63 or the main gas cooler bypass passage 64.

Thus, some or all of the water passed through the intercooler 23 pass through the external heat radiation apparatus 62 through the main gas cooler bypass passage 64, and then returns to the joining portion 61 on the upstream of the auxiliary gas cooler 25.

In addition, the water flow rate through the second bypass passage 82 from the third branch portion 80 on the downstream of the auxiliary gas cooler 25 can be controlled by control of an opening degree of the second bypass control valve 83, and some of water passed through the auxiliary gas cooler 25 pass through the external heat radiation apparatus 62 through the main gas cooler bypass passage 64 and then return to the joining portion 61 on the upstream of the auxiliary gas cooler 25.

Thus, the water flow rate through the respective auxiliary gas cooler 25, the intercooler 23, and the main gas cooler 24 can be individually regulated by regulation of the flow rate regulating mechanism 65 and the second bypass control valve 83. For this reason, since operating conditions of a refrigeration cycle can also be regulated by regulation of the flow rate of individual water, the refrigeration apparatus 1 can be operated with higher efficiency.

In the fourth embodiment, as described above, the third branch portion 80 is provided on the water pipe 40 between the auxiliary gas cooler 25 and the intercooler 23, the third joining portion 81 is provided upstream of the external heat radiation apparatus 62 on the main gas cooler bypass passage 64, and the refrigeration apparatus 1 includes the second bypass passage 82 which branches at the third branch portion 80 and through which the water joining the third joining portion 81 flows and the second bypass control valve 83 that is provided on the second bypass passage 82 to control the water flow rate through the second bypass passage 82.

Thus, the water flow rate through the respective auxiliary gas cooler 25, the intercooler 23, and the main gas cooler 24 can be individually regulated by the regulation of the flow rate regulating mechanism 65 and the second bypass control valve 83. For this reason, since the operating conditions of the refrigeration cycle can also be regulated by the regulation of the flow rate of the individual water, the refrigeration apparatus 1 can be operated with higher efficiency.

Since the refrigerant temperature at the outlet of the refrigeration apparatus 1 can be lowered, the refrigeration apparatus 1 can be operated without causing insufficient cooling capacity even when the hot-water supply temperature is raised.

Further, even when the hot-water supply temperature is raised and the water flow rate through the main passage 63 needs to be regulated, the refrigeration apparatus 1 can be continuously operated by flowing of the water through the second bypass passage 82 and continuous heat radiation to the outside.

A fifth embodiment of the present invention will be described below.

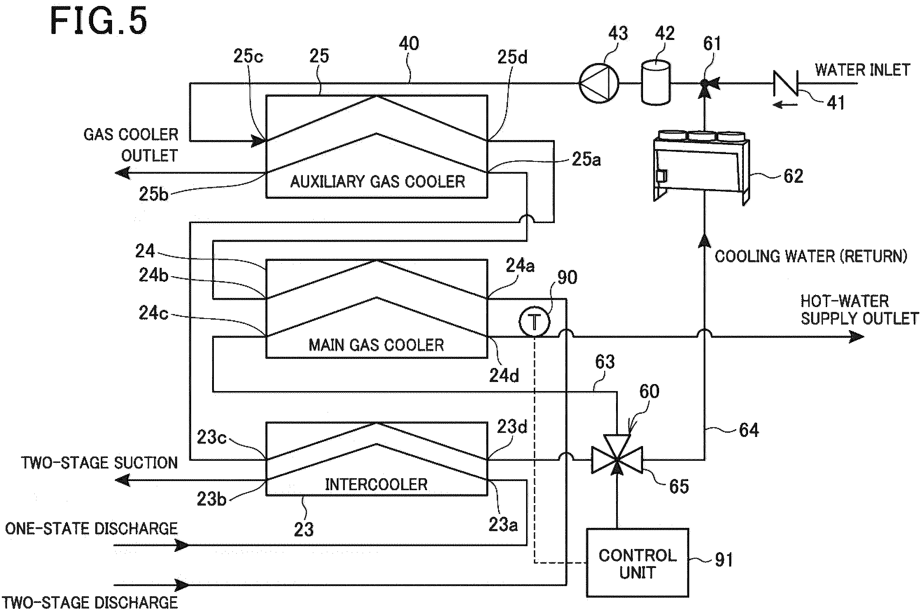

Fig. 5 is a circuit diagram of a gas cooler unit 20 according to the fifth embodiment of the present invention.

In the present embodiment, the gas cooler unit 20 has a configuration equal to that in the second embodiment.

In the present embodiment, a hot-water supply temperature sensor 90 is provided on a water pipe 40 on a downstream of a main gas cooler 24 to detect a temperature of water for hot water supply.

Here, the hot-water supply temperature sensor 90 may be provided inside or outside the water pipe 40 on the downstream of the main gas cooler 24 as long as being capable of detecting the temperature of the water for hot water supply.

In the present embodiment, the refrigeration apparatus 1 includes a control unit 91 that collectively controls the respective portions. The control unit 91 is configured to control a flow rate of water flowing through a main passage 63 based on a temperature detected by the hot-water supply temperature sensor 90 and a set temperature for hot-water supply.

An operation of the fifth embodiment will be described below.

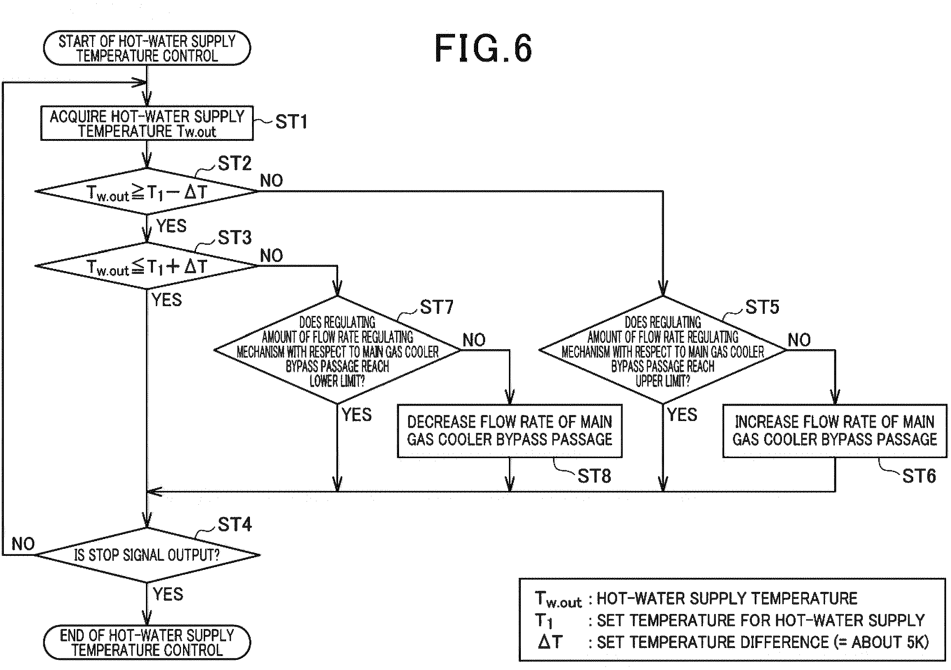

Fig. 6 is a flowchart illustrating the operation of the fifth embodiment.

As illustrated in Fig. 6, the control unit 91 acquires a hot-water supply temperature Tw.out sent from the hot-water supply temperature sensor 90 (ST1).

The control unit 91 determines whether the hot-water supply temperature Tw.out is equal to or higher than a value (set temperature for hot-water supply T1 - set temperature difference ΔT) (ST2). Here, ΔT is set to about 5 K, for example.

When the control unit 91 determines that the hot-water supply temperature Tw.out is equal to or higher than the value (set temperature for hot-water supply T1 - set temperature difference ΔT) (ST2: YES), the control unit 91 determines whether the hot-water supply temperature Tw.out is equal to or lower than a value (set temperature for hot-water supply T1 + set temperature difference ΔT) (ST3).

When the control unit 91 determines that the hot-water supply temperature Tw.out is equal to lower than the value (set temperature for hot-water supply T1 + set temperature difference ΔT) (ST3: YES), the control unit 91 determines whether a stop signal is output (ST4), and performs repeatedly the operations described above when the stop signal is not output (ST4: NO).

In addition, the control unit 91 ends the control of the flow rate regulating mechanism 65 when determining that the stop signal is output (ST4: YES).

On the other hand, when the control unit 91 determines that the hot-water supply temperature Tw.out is not equal to or higher than the value (set temperature for hot-water supply T1 - set temperature difference ΔT) (ST2: NO), the control unit 91 determines whether the regulating amount of the flow rate regulating mechanism 65 with respect to the main gas cooler bypass passage 64 reaches an upper limit (ST5).

Here, the regulating amount indicates an amount to be regulated by the flow rate regulating mechanism 65, for example, a valve opening degree or a flow rate to be regulated by the flow rate regulating mechanism 65.

When the control unit 91 determines that the regulating amount of the flow rate regulating mechanism 65 with respect to the main gas cooler bypass passage 64 reaches the upper limit (ST5: YES), the control unit 91 determines whether the stop signal is output (ST4) and performs repeatedly the operations described above when the stop signal is not output (ST4: NO).

Further, when the control unit 91 ends the control of the flow rate regulating mechanism 65 when determining that the stop signal is output (ST4: YES).

When determining that the regulating amount of the flow rate regulating mechanism 65 with respect to the main gas cooler bypass passage 64 does not reach the upper limit (ST5: NO), the control unit 91 controls the flow rate regulating mechanism 65 so as to increase the flow rate of the main gas cooler bypass passage 64 (ST6).

Then, the control unit 91 determines whether the stop signal is output (ST4), and performs repeatedly the operations described above when the stop signal is not output (ST4: NO).

In addition, when determining that the stop signal is output (ST4: YES), the control unit 91 ends the control of the flow rate regulating mechanism 65.

On the other hand, when the control unit 91 determines that the hot-water supply temperature Tw.out is not equal to or lower than the value (set temperature for hot-water supply T1 + set temperature difference ΔT) (ST3: NO), the control unit 91 determines whether the regulating amount of the flow rate regulating mechanism 65 with respect to the main gas cooler bypass passage 64 reaches a lower limit (ST7).

When the control unit 91 determines that the regulating amount of the flow rate regulating mechanism 65 with respect to the main gas cooler bypass passage 64 reaches the lower limit (ST7: YES), the control unit 91 determines whether the stop signal is output (ST4) and performs repeatedly the operations described above when the stop signal is not output (ST4: NO).

When determining that the stop signal is output (ST4: YES), the control unit 91 ends the control of the flow rate regulating mechanism 65.

Further, when determining whether the regulating amount of the flow rate regulating mechanism 65 with respect to the main gas cooler bypass passage 64 does not reach the lower limit (ST7: NO), the control unit 91 controls the flow rate regulating mechanism 65 so as to decrease the flow rate of the main gas cooler bypass passage 64 (ST8).

Then, the control unit 91 determines whether the stop signal is output (ST4), and performs repeatedly the operations described above when the stop signal is not output (ST4: NO).

Further, when determining that the stop signal is output (ST4: YES), the control unit 91 ends the control of the flow rate regulating mechanism 65.

By such control, the hot-water supply temperature is detected by the hot-water supply temperature sensor 90, the water flow rate through the main gas cooler bypass passage 64 can be increased by the control of the flow rate regulating mechanism 65 when the hot-water supply temperature is lower than the set temperature, and the water flow rate through the main gas cooler bypass passage 64 can be decreased by the control of the flow rate regulating mechanism 65 when the hot-water supply temperature is higher than the set temperature.

Therefore, based on the difference between the set temperature and the actual temperature of water, the water flow rate through the main passage 63 can be controlled, and the hot-water supply temperature can be regulated. Further, the refrigerant temperature at the outlet of the refrigeration apparatus 1 can also be lowered without causing insufficient heat radiation of the refrigerant in the intercooler 23, the main gas cooler 24, and the auxiliary gas cooler 25, and the refrigeration apparatus 1 can be operated while maintaining the cooling capacity.

In the present embodiment, the water flow rate through the main passage 63 is controlled based on the temperature detected by the hot-water supply temperature sensor 90 provided in the gas cooler unit 20. However, the flow rate may be controlled using, for example, a refrigerator inlet temperature sensor 66, a refrigerator outlet temperature sensor 67, a discharge temperature sensor 68, a split heat exchanger outlet temperature sensor 69, or a pressure sensor which are provided in the compressor unit 10.

In the present embodiment, as described above, the refrigeration apparatus 1 includes the hot-water supply temperature sensor 90 that is provided on the water pipe 40 on the downstream of the main gas cooler 24 to detect the temperature of the water for hot water supply and the control unit 91 that controls the flow rate regulating mechanism 65 based on the hot-water supply temperature detected by the hot-water supply temperature sensor 90, and the control unit 91 controls the water flow rate through the main passage 63 based on the temperature detected by the hot-water supply temperature sensor 90 and the set temperature for hot-water supply.

Therefore, based on the difference between the set temperature and the actual temperature of water, the water flow rate through the main passage 63 can be controlled, and the hot-water supply temperature can be regulated. Further, the refrigerant temperature at the outlet of the refrigeration apparatus 1 can also be lowered without causing insufficient heat radiation of the refrigerant in the intercooler 23, the main gas cooler 24, and the auxiliary gas cooler 25, and the refrigeration apparatus 1 can be operated while maintaining the cooling capacity.

A sixth embodiment of the present invention will be described below.

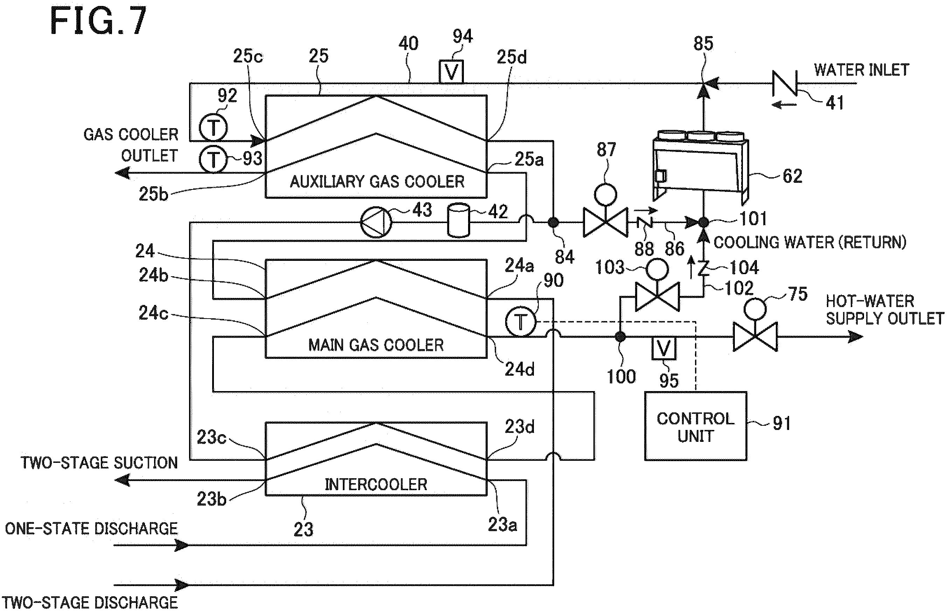

Fig. 7 is a circuit diagram of a gas cooler unit 20 according to the sixth embodiment of the present invention.

In the present embodiment, a fourth branch portion 84 is provided on a water pipe 40 between an auxiliary gas cooler 25 and an intercooler 23. In addition, a fourth joining portion 85 is provided on the water pipe 40 on an upstream of the auxiliary gas cooler 25.

A fourth bypass passage 86, which branches at the fourth branch portion 84 and through which water joining the fourth joining portion 85 flows, is connected to the fourth branch portion 84, and a fourth bypass control valve 87 is provided in the middle of the fourth bypass passage 86 to control a flow rate of water flowing through the fourth bypass passage 86.

Further, a check valve 88 for the fourth bypass passage is provided on the fourth bypass passage 86.

The fourth branch portion 84 is connected to the water pipe 40 in the present embodiment, but a three-way valve may be installed in the fourth branch portion 84 as the fourth bypass control valve 87 that controls the water flow rate through the fourth bypass passage 86, and the water flow rate through the fourth bypass passage 86 may be regulated by the three-way valve.

In the present embodiment, a fifth branch portion 100 is provided on the water pipe 40 on a downstream of the main gas cooler 24. A fifth bypass passage 102 connected to the fifth joining portion 101 is connected to the fifth branch portion 100.

A fifth bypass control valve 103 is provided in the middle of the fifth bypass passage 102 to control a flow rate of water flowing through the fifth bypass passage 102. Further, a check valve 104 for the fifth bypass passage is provided on the fifth bypass passage 102.

The fifth branch portion 100 is connected to the water pipe 40 in the present embodiment, but a three-way valve may be installed in the fifth branch portion 100 as the fifth bypass control valve 103 that controls the water flow rate through the fifth bypass passage 102, and the water flow rate through the fifth bypass passage 102 may be regulated by the three-way valve.

In the present embodiment, a suction tank 42 and a water supply pump 43 are provided on a water passage between the auxiliary gas cooler 25 and the intercooler 23.

Also in the present embodiment, the suction tank 42 is installed on the upstream of the water supply pump 43, and thus it is possible to prevent unstable water supply due to occurrence of cavitation depending on a pressure drop in the element in front of the water supply pump 43 and to allow the water to stably flow onto the water passage.

In the present embodiment, a hot-water supply temperature sensor 90 is provided on the water pipe 40 on the downstream of the main gas cooler 24 to detect a temperature of water for hot water supply. A cooling water temperature sensor 92 is provided on the water pipe 40 on an upstream of the auxiliary gas cooler 25 to detect a temperature of cooling water flowing into the auxiliary gas cooler 25. Further, a refrigerant outlet temperature sensor 93 is provided to detect a refrigerant temperature at an outlet of the auxiliary gas cooler 25.

Further, a cooling water flow meter 94 is provided to detect a flow rate of the cooling water flowing into the auxiliary gas cooler 25 of the water pipe 40, and a hot-water supply flow meter 95 is provided on the downstream of the main gas cooler 24 on the water pipe 40 to detect a flow rate of hot water to be supplied.

In the present embodiment, the refrigeration apparatus 1 includes a control unit 91 that collectively controls the respective portions. The control unit 91 is configured to, based on the temperatures detected by the hot-water supply temperature sensor 90, the cooling water temperature sensor 92, and the refrigerant outlet temperature sensor 93 and the flow rates detected by the cooling water flow meter 94 and the hot-water supply flow meter 95, control opening degrees of respective control valves, to control the water flow rate through the main gas cooler 24, and to regulate the hot-water supply temperature.

Since other configurations are the same as those in the respective embodiments described above, the same portions are denoted by the same reference numerals and the description thereof will not be presented.

An operation of the sixth embodiment will be described below.

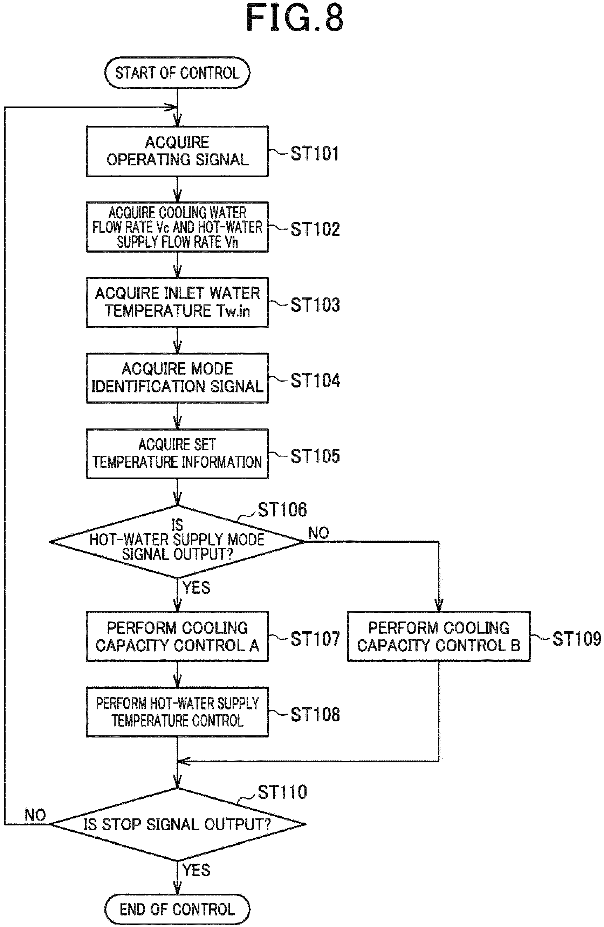

Fig. 8 is a flowchart illustrating control of the refrigeration apparatus according to the sixth embodiment.

As illustrated in Fig. 8, when acquiring an operating signal (ST101), the control unit 91 acquires a cooling water flow rate Vc from the cooling water flow meter 94 and a hot-water supply flow rate Vh from the hot-water supply flow meter 95 (ST102), and acquires a cooling water inlet temperature Tw.in from the cooling water temperature sensor 92 (ST103).

Then, the control unit 91 acquires a mode identification signal (ST104), acquires set temperature information (ST105), and determines whether a hot-water supply mode signal is output (ST106).

When determining that there is the hot-water supply mode (ST106: YES), the control unit 91 performs cooling capacity control A (ST107) and also performs hot-water supply temperature control (ST108).

When determining that there is not the hot-water supply mode (ST106: NO), the control unit 91 determines that there is a refrigerating mode in which the efficiency of the refrigerator is emphasized and performs cooling capacity control B (ST109).

These cooling capacity control A, the hot-water supply temperature control, and the cooling capacity control B are performed until a stop signal is output (ST110).

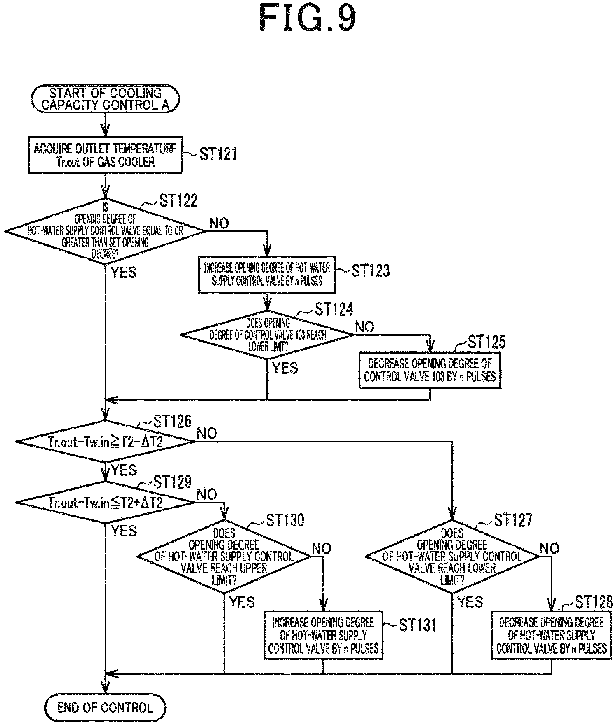

Fig. 9 is a flowchart illustrating an operation of the cooling capacity control A in the sixth embodiment.

As illustrated in Fig. 9, when the cooling capacity control A is performed, the control unit 91 acquires a refrigerant outlet temperature Tr.out of the auxiliary gas cooler 25 from the refrigerant outlet temperature sensor 93 (ST121) and then determines whether the opening degree of the hot-water supply control valve 75 is equal to or greater than the set opening degree (ST122).

When determining that the opening degree of the hot-water supply control valve 75 is not equal to or greater than the set opening degree (ST122: NO), the control unit 91 controls the opening degree of the hot-water supply control valve 75 to increase the opening degree by n pulses (ST123). Then, the control unit 91 determines whether the opening degree of the fifth bypass control valve 103 reaches a lower limit (ST124). When determining that the opening degree of the fifth bypass control valve 103 does not reach the lower limit (ST124: NO), the control unit 91 controls the opening degree of the fifth bypass control valve 103 to decrease the opening degree by n pulses (ST125).

When determining that the opening degree of the hot-water supply control valve 75 is equal to or greater than the set opening degree (ST122: YES), the control unit 91 determines whether a difference between the refrigerant outlet temperature Tr.out and the cooling water inlet temperature Tw.in is equal to or greater than a value (set temperature for cooling T2 - set temperature difference ΔT2) (ST126).

Then, when determining that the value (Tr.out - Tw.in) is not equal to or greater than the value (T2 - ΔT2) (ST126: NO), the control unit 91 determines whether the opening degree of the hot-water supply control valve 75 reaches the lower limit (ST127). When determining that the opening degree of the hot-water supply control valve 75 does not reach the lower limit (ST127: NO), the control unit 91 controls the opening degree of the hot-water supply control valve 75 to decrease the opening degree by n pulses (ST128). When determining that the opening degree of the hot-water supply control valve 75 reaches the lower limit (ST127: YES), the control unit 91 ends the control of the cooling capacity control A.

When determining that the value (Tr.out - Tw.in) is equal to or greater than the value (T2 - ΔT2) (ST126: YES), the control unit 91 determines whether the value (Tr.out - Tw.in) is equal to or greater than a value (T2 + ΔT2) (ST129).

Then, when determining that the value (Tr.out - Tw.in) is not equal to or greater than the value (T2 + ΔT2) (ST129: NO), the control unit 91 determines whether the opening degree of the hot-water supply control valve 75 reaches an upper limit (ST130). When determining that the opening degree of the hot-water supply control valve 75 does not reach the upper limit (ST130: NO), the control unit 91 controls the opening degree of the hot-water supply control valve 75 to increase the opening degree by n pulses (ST131). When determining that the opening degree of the hot-water supply control valve 75 reaches the upper limit (ST130: YES), the control unit 91 ends the control of the cooling capacity control A.

The hot-water supply temperature control will be described below.

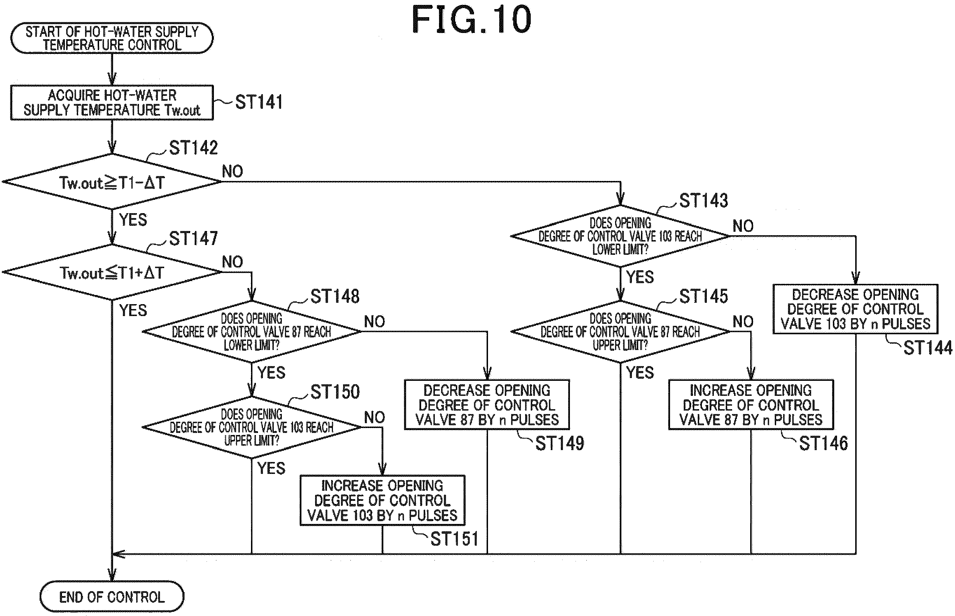

Fig. 10 is a flowchart illustrating an operation of the hot-water supply temperature control in the sixth embodiment.

As illustrated in Fig. 10, the control unit 91 acquires a hot-water supply temperature Tw.out from the hot-water supply temperature sensor 90 (ST141).

The control unit 91 determines whether the hot-water supply temperature Tw.out is equal to or higher than the value (set temperature for hot-water supply T1 - set temperature difference ΔT) (ST142).

When determining that the hot-water supply temperature Tw.out is not equal to or higher than the value (T1 - ΔT) (ST142: NO), the control unit 91 determines whether the opening degree of the fifth bypass control valve 103 reaches the lower limit (ST143).

When determining that the opening degree of the fifth bypass control valve 103 does not reach the lower limit (ST143: NO), the control unit 91 controls the opening degree of the fifth bypass control valve 103 to decrease the opening degree by n pulses (ST144). Then, the control unit 91 ends the hot-water supply temperature control.

When determining that the opening degree of the fifth bypass control valve 103 reaches the lower limit (ST143: YES), the control unit 91 determines whether the opening degree of the fourth bypass control valve 87 reaches the upper limit (ST145).

When determining that the opening degree of the fourth bypass control valve 87 does not reach the upper limit (ST145: NO), the control unit 91 controls the opening degree of the fourth bypass control valve 87 to increase the opening degree by n pulses (ST146).

When determining that the opening degree of the fourth bypass control valve 87 reaches the upper limit (ST145: YES), the control unit 91 ends the control.

When determining that the hot-water supply temperature Tw.out is equal to or higher than the value (T1 - ΔT) (ST142: YES), the control unit 91 determines whether the hot-water supply temperature Tw.out is equal to lower than the value (set temperature for hot-water supply T1 + set temperature difference ΔT) (ST147).

When determining that the hot-water supply temperature Tw.out is not equal to or lower than the value (set temperature for hot-water supply T1 + set temperature difference ΔT) (ST147: NO), the control unit 91 determines whether the opening degree of the fourth bypass control valve 87 reaches a lower limit (ST148).

When determining that the opening degree of the fourth bypass control valve 87 does not reach the lower limit (ST148: NO), the control unit 91 controls the opening degree of the fourth bypass control valve 87 to decrease the opening degree by n pulses (ST149). Then, the control unit 91 ends the hot-water supply temperature control.

When determining that the opening degree of the fourth bypass control valve 87 reaches the lower limit (ST148: YES), the control unit 91 determines whether the opening degree of the fifth bypass control valve 103 reaches an upper limit (ST150).

When determining that the opening degree of the fifth bypass control valve 103 does not reach the upper limit (ST150: NO), the control unit 91 controls the opening degree of the fifth bypass control valve 103 to increase the opening degree by n pulses (ST151).

When determining that the opening degree of the fifth bypass control valve 103 reaches the upper limit (ST150: YES), the control unit 91 ends the hot-water supply temperature control.

The cooling capacity control B will be described below.

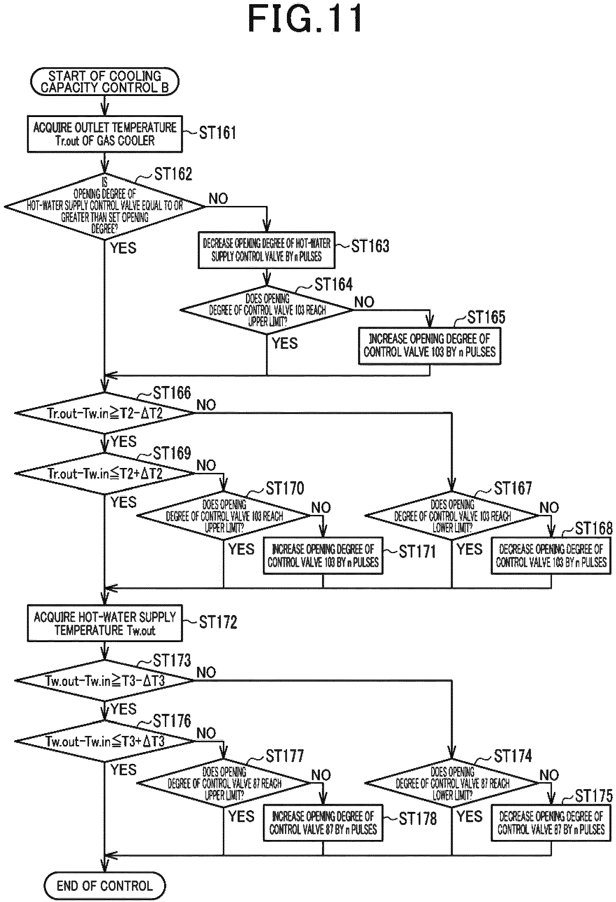

Fig. 11 is a flowchart illustrating an operation of the cooling capacity control B in the sixth embodiment.

As illustrated in Fig. 11, when the cooling capacity control B is performed, the control unit 91 acquires the refrigerant outlet temperature Tr.out of the auxiliary gas cooler 25 from the refrigerant outlet temperature sensor 93 (ST161), and determines whether the opening degree of the hot-water supply control valve 75 is equal to or greater than the set opening degree (ST162).

When determining that the opening degree of the hot-water supply control valve 75 is not equal to or greater than the set opening degree (ST162: NO), the control unit 91 controls the opening degree of the hot-water supply control valve 75 to increase the opening degree by n pulses (ST163). Then, the control unit 91 determines whether the opening degree of the fifth bypass control valve 103 reaches an upper limit (ST164). When determining that the opening degree of the fifth bypass control valve 103 does not reach the upper limit (ST164: NO), the control unit 91 controls the opening degree of the fifth bypass control valve 103 to increase the opening degree by n pulses (ST165).

When determining that the opening degree of the hot-water supply control valve 75 is equal to or greater than the set opening degree (ST162: YES), the control unit 91 determines whether a difference between the refrigerant outlet temperature Tr.out and the cooling water inlet temperature Tw.in is equal to or greater than a value (set temperature for cooling T2 - set temperature difference ΔT2) (ST166).

Then, when determining that the value (Tr.out - Tw.in) is not equal to or greater than the value (T2 - ΔT2) (ST166: NO), the control unit 91 determines whether the opening degree of the fifth bypass control valve 103 reaches the lower limit (ST167). When determining that the opening degree of the fifth bypass control valve 103 does not reach the lower limit (ST167: NO), the control unit 91 controls the opening degree of the fifth bypass control valve 103 to decrease the opening degree by n pulses (ST168).

When determining that the value (Tr.out - Tw.in) is equal to or greater than the value (T2 - ΔT2) (ST166: YES), the control unit 91 determines whether the value (Tr.out - Tw.in) is equal to or smaller than a value (T2 + ΔT2) (ST169).

Then, when determining that the value (Tr.out - Tw.in) is not equal to or smaller than the value (T2 + ΔT2) (ST169: NO), the control unit 91 determines whether the opening degree of the fifth bypass control valve 103 reaches an upper limit (ST170). When determining that the opening degree of the fifth bypass control valve 103 does not reach the upper limit (ST170: NO), the control unit 91 controls the opening degree of the fifth bypass control valve 103 to increase the opening degree by n pulses (ST171).

Subsequently, the control unit 91 acquires a hot-water supply temperature Tw.out from the hot-water supply temperature sensor 90 (ST172).

The control unit 91 determines whether a difference between the hot-water supply temperature Tw.out and the cooling water inlet temperature Tw.in is equal to or higher than a value (set temperature for heat radiation T3 - set temperature difference ΔT3) (ST173).

When determining that the difference between the hot-water supply temperature Tw.out and the cooling water inlet temperature Tw.in is not equal to or higher than the value (T3 - ΔT3) (ST173: NO), the control unit 91 determines whether the opening degree of the fourth bypass control valve 87 reaches a lower limit (ST174).

When determining that the opening degree of the fourth bypass control valve 87 does not reach the lower limit (ST174: NO), the control unit 91 controls the opening degree of the fourth bypass control valve 87 to decrease the opening degree by n pulses (ST175). Then, the control unit 91 ends the control of the cooling capacity control B.

On the other hand, when determining that the difference between the hot-water supply temperature Tw.out and the cooling water inlet temperature Tw.in is equal to or higher than the value (T3 - ΔT3) (ST173: YES), the control unit 91 determines whether the difference between the hot-water supply temperature Tw.out and the cooling water inlet temperature Tw.in is equal to or lower than a value (set temperature for heat radiation T3 + set temperature difference ΔT3) (ST176).

When determining that the difference between the hot-water supply temperature Tw.out and the cooling water inlet temperature Tw.in is not equal to or lower than the value (T3 + ΔT3) (ST176: NO), the control unit 91 determines whether the opening degree of the fourth bypass control valve 87 reaches an upper limit (ST177). Then, when determining that the opening degree of the fourth bypass control valve 87 does not reach the upper limit (ST177: NO), the control unit 91 controls the opening degree of the fourth bypass control valve 87 to increase the opening degree by n pulses (ST178). When determining that the opening degree of the fourth bypass control valve 87 reaches the upper limit (ST177: YES), the control unit 91 ends the control of the cooling capacity control B.

The opening degree of the control valve is represented by n pulses and an arbitrary opening degree in the control flow of the present embodiment, but, during the control of a plurality of control valves, different opening degrees or the same opening degree may be set for individual control valves.

In the present embodiment, the water flow rate through the fourth bypass passage 86 from the auxiliary gas cooler 25 can be controlled by the control of the opening degree of the fourth bypass control valve 87, and some of the water passed through the auxiliary gas cooler 25 pass through the external heat radiation apparatus 62 and then return to the water passage on the upstream of the auxiliary gas cooler 25.

Thus, the water flow rate through the intercooler 23 and the main gas cooler 24 can be individually controlled separately from the water flow rate through the auxiliary gas cooler 25 by the control of the fourth bypass control valve 87. For this reason, the cooling capacity of the refrigeration apparatus 1 can be regulated by the control of the water flow rate through the auxiliary gas cooler 25 and the hot-water supply temperature can also be regulated by the control of the water flow rate through the main gas cooler 24.

In addition, the water flow rate through the fifth bypass passage 102 can be controlled by the control of the opening degree of the fifth bypass control valve 103.

Thereby, the water returns to the external heat radiation apparatus 62 on the downstream of the main gas cooler 24, thereby heat not used for the hot water supply can also be radiated by the external heat radiation apparatus 62, and the heat is continuously radiated to the outside, thereby the refrigeration apparatus 1 can be continuously operated.

The control unit 91 can regulate the hot-water supply temperature by controlling the water flow rate through the main gas cooler 24 based on the value detected by the hot-water supply temperature sensor 90. Thereby, insufficient cooling of the refrigeration apparatus 1 is not caused, and the refrigeration apparatus 1 can be continuously operated while the hot-water supply temperature is maintained at a temperature close to the set temperature.

In the present invention, the water flow rate through the main gas cooler 24 is controlled based on the temperature detected by the hot-water supply temperature sensor 90, the cooling water temperature sensor 92, and the refrigerant outlet temperature sensor 93 which are provided in the gas cooler unit 20. However, the flow rate may be controlled using, for example, a refrigerator inlet temperature sensor 66, a refrigerator outlet temperature sensor 67, a discharge temperature sensor 68, a split heat exchanger outlet temperature sensor 69, or a pressure sensor which are provided in the compressor unit 10.

In the sixth embodiment, as described above, the fourth branch portion 84 is provided on the water pipe 40 between the auxiliary gas cooler 25 and the intercooler 23, the fourth joining portion 85 is provided on the water pipe 40 on the upstream of the auxiliary gas cooler 25, and the refrigeration apparatus 1 includes the fourth bypass passage 86 that branches at the fourth branch portion 84 and through which the branched water joins the fourth joining portion 85 after passing through the external heat radiation apparatus 62 and the fourth bypass control valve 87 that is provided on the fourth bypass passage 86 to control the water flow rate through the fourth bypass passage 86.

Thus, the water flow rate through the intercooler 23 and the main gas cooler 24 can be individually controlled separately from the water flow rate through the auxiliary gas cooler 25 by the control of the fourth bypass control valve 87. For this reason, the cooling capacity of the refrigeration apparatus 1 can be regulated by the control of the water flow rate through the auxiliary gas cooler 25 and the hot-water supply temperature can also be regulated by the control of the water flow rate through the main gas cooler 24.

In the present embodiment, the fifth branch portion 100 is provided on the downstream of the main gas cooler 24, the fifth joining portion 101 is provided on the fourth bypass passage 86 on the upstream of the external heat radiation apparatus 62 of the fourth bypass passage 86, the fifth bypass passage 102 that is provided to return the water, which passes through the external heat radiation apparatus 62 from the fifth branch portion 100, to the upstream of the auxiliary gas cooler 25, and the fifth bypass control valve 103 that controls the flow rate through the fifth bypass passage 102.

Thereby, the water returns to the external heat radiation apparatus 62 on the downstream of the main gas cooler 24, thereby heat not used for the hot water supply can also be radiated by the external heat radiation apparatus 62, and the heat is continuously radiated to the outside, thereby the refrigeration apparatus 1 can be continuously operated.

In the present embodiment, the water supply pump 43 is provided on the water passage between the auxiliary gas cooler 25 and the intercooler 23.

Thus, since the water supply pump 43 is located downstream of the auxiliary gas cooler 25, the temperature of the water entering the auxiliary gas cooler can be prevented from being raised due to the heat generated by the water supply pump, the temperature of the water entering the auxiliary gas cooler 25 can be lowered, higher cooling capacity can be obtained, and the amount of heat generated by the water supply pump 43 can be used for raising the temperature of the water.

A seventh embodiment of the present invention will be described below.

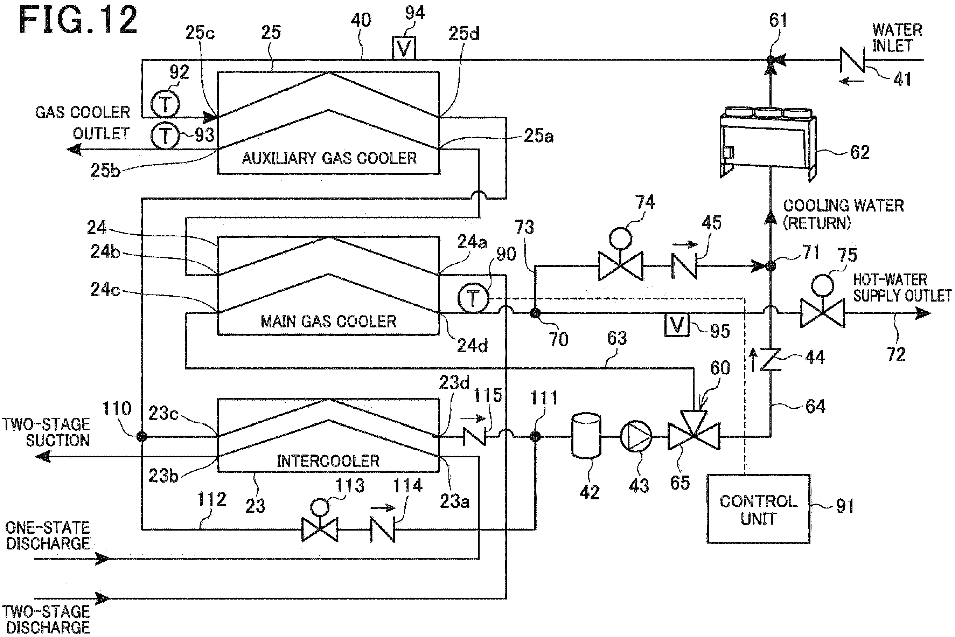

Fig. 12 is a circuit diagram of a gas cooler unit 20 according to the seventh embodiment of the present invention.

In the present embodiment, a sixth branch portion 110 is provided on a water pipe 40 between an auxiliary gas cooler 25 and an intercooler 23, and a sixth joining portion 111 is provided on the water pipe 40 between the intercooler 23 and a main gas cooler 24.

A sixth bypass passage 112, which branches at the sixth branch portion 110 and through which water joining the sixth joining portion 111 flows, is connected to the sixth branch portion 110, and a sixth bypass control valve 113 is provided in the middle of the sixth bypass passage 112 to control a flow rate of water flowing through the sixth bypass passage 112.

Further, a check valve 114 for the sixth bypass passage is provided on the sixth bypass passage 112, and an intercooler outlet check valve 115 is provided on a water passage between the intercooler 23 and the sixth joining portion 111.

The sixth branch portion 110 is connected to the water pipe 40 in the present embodiment, but a three-way valve may be installed in the sixth branch portion 110 as the sixth bypass control valve 113 that controls the water flow rate through the sixth bypass passage 112, and the water flow rate through the sixth bypass passage 112 may be regulated by the three-way valve.

In the present embodiment, a suction tank 42 and a water supply pump 43 are provided on a water passage between the intercooler 23 and the main gas cooler 24.

Also in the present embodiment, the suction tank 42 is installed on the upstream of the water supply pump 43, and thus it is possible to prevent unstable water supply due to occurrence of cavitation depending on a pressure drop in the element in front of the water supply pump 43 and to allow the water to stably flow onto the water passage.

In the present embodiment, the control unit 91 is also configured to control the water flow rate through the main gas cooler 24 and to regulate the hot-water supply temperature based on the temperature detected by the hot-water supply temperature sensor 90 and the set temperature for hot-water supply.

Since other configurations are the same as those in the respective embodiments described above, the same portions are denoted by the same reference numerals and the description thereof will not be presented.

An operation of the seventh embodiment will be described below.

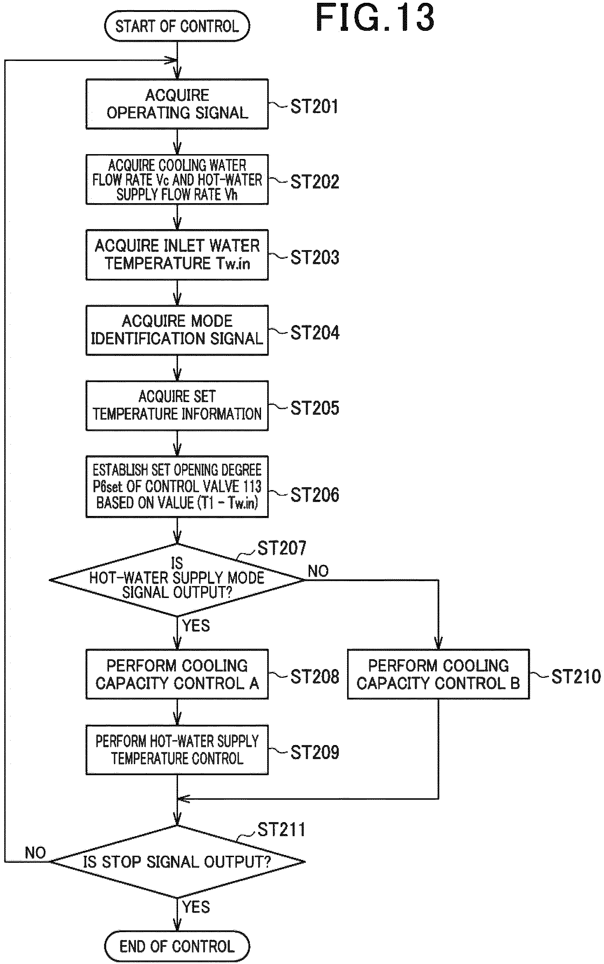

Fig. 13 is a flowchart illustrating control of the refrigeration apparatus according to the seventh embodiment.

When acquiring an operating signal (ST201), the control unit 91 acquires a cooling water flow rate Vc from the cooling water flow meter 94 and a hot-water supply flow rate Vh from the hot-water supply flow meter 95 (ST202), and acquires a cooling water inlet temperature Tw.in from the cooling water temperature sensor 92 (ST203).

Then, the control unit 91 acquires a mode identification signal (ST204), acquires set temperature information (ST205), and establishes a set opening degree P6set of the sixth bypass control valve 113 based on a value (T1 - Tw.in) (ST206).

The control unit 91 determines whether a hot-water supply mode signal is output (ST207). When determining that there is the hot-water supply mode (ST207: YES), the control unit 91 performs cooling capacity control A (ST208) and also performs hot-water supply temperature control (ST209).

When determining that there is not the hot-water supply mode (ST207: NO), the control unit 91 determines that there is a refrigerating mode in which the efficiency of the refrigerator is emphasized and performs cooling capacity control B (ST210).

These cooling capacity control A, the hot-water supply temperature control, and the cooling capacity control B are performed until a stop signal is output (ST211).

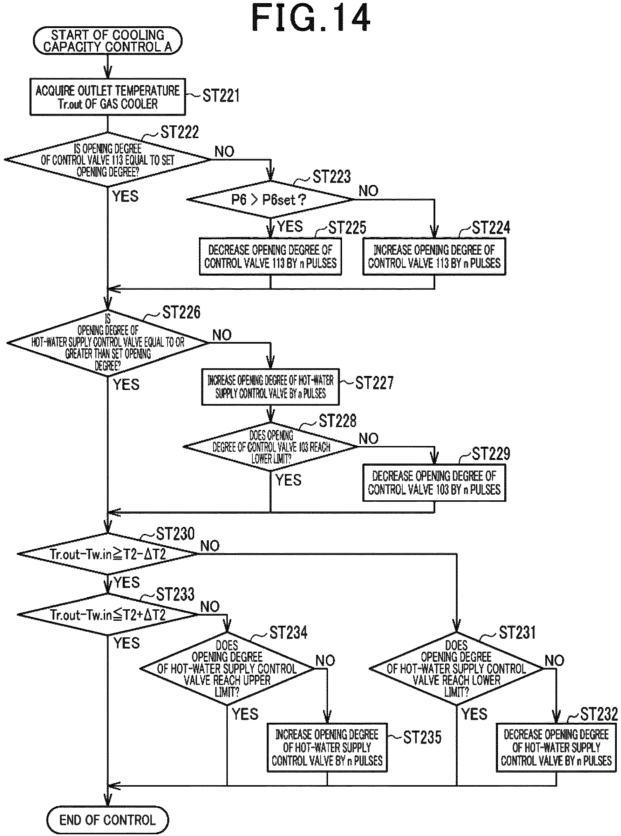

Fig. 14 is a flowchart illustrating an operation of the cooling capacity control A in the seventh embodiment.

As illustrated in Fig. 14, when performing the cooling capacity control A, the control unit 91 acquires a refrigerant outlet temperature Tr.out of the auxiliary gas cooler 25 from the refrigerant outlet temperature sensor 93 (ST221) and then determines whether the opening degree of the sixth bypass control valve 113 is equal to the set opening degree (ST222).

When determining that the opening degree of the sixth bypass control valve 113 is not equal to the set opening degree (ST222: NO), the control unit 91 determines whether an opening degree P6 of the sixth bypass control valve 113 is larger than the set opening degree P6set (ST223).

When determining that the opening degree P6 of the sixth bypass control valve 113 is smaller than the set opening degree P6set (ST223: NO), the control unit 91 controls the opening degree of the sixth bypass control valve 113 to increase the opening degree by n pulses (ST224).

When determining that the opening degree P6 of the sixth bypass control valve 113 is larger than the set opening degree P6set (ST223: YES), the control unit 91 controls the opening degree of the sixth bypass control valve 113 to decrease the opening degree by n pulses (ST225).

When determining that the opening degree of the sixth bypass control valve 113 is equal to the set opening degree (ST222: YES), the control unit 91 determines whether the opening degree of the hot-water supply control valve 75 is equal to or greater than the set opening degree (ST226).

When determining that the opening degree of the hot-water supply control valve 75 is not equal to or greater than the set opening degree (ST226: NO), the control unit 91 controls the opening degree of the hot-water supply control valve 75 to increase the opening degree by n pulses (ST227). Then, the control unit 91 determines whether the opening degree of the fifth bypass control valve 103 reaches a lower limit (ST228). When determining that the opening degree of the fifth bypass control valve 103 does not reach the lower limit (ST228: NO), the control unit 91 controls the opening degree of the fifth bypass control valve 103 to decrease the opening degree by n pulses (ST229).

When determining that the opening degree of the hot-water supply control valve 75 is equal to or greater than the set opening degree (ST226: YES), the control unit 91 determines whether a difference between the refrigerant outlet temperature Tr.out and the cooling water inlet temperature Tw.in is equal to or greater than a value (set temperature for hot-water supply T2 - set temperature difference ΔT2) (ST230).

Then, when determining that the value (Tr.out - Tw.in) is not equal to or greater than the value (T2 - ΔT2) (ST230: NO), the control unit 91 determines whether the opening degree of the hot-water supply control valve 75 reaches the lower limit (ST231). When determining that the opening degree of the hot-water supply control valve 75 does not reach the lower limit (ST231: NO), the control unit 91 controls the opening degree of the hot-water supply control valve 75 to decrease the opening degree by n pulses (ST232). When the opening degree of the hot-water supply control valve 75 reaches the lower limit, the control of the cooling capacity control A ends.

When determining that the value (Tr.out - Tw.in) is equal to or greater than the value (T2 - ΔT2) (ST230: YES), the control unit 91 determines whether the value (Tr.out - Tw.in) is equal to or smaller than a value (T2 + ΔT2) (ST233).

Then, when determining that the value (Tr.out - Tw.in) is not equal to or smaller than the value (T2 + ΔT2) (ST233: NO), the control unit 91 determines whether the opening degree of the hot-water supply control valve 75 reaches an upper limit (ST234). When determining that the opening degree of the hot-water supply control valve 75 does not reach the upper limit (ST234: NO), the control unit 91 controls the opening degree of the hot-water supply control valve 75 to increase the opening degree by n pulses (ST235). When the opening degree of the hot-water supply control valve 75 reaches the upper limit, the control of the cooling capacity control A ends.

The hot-water supply temperature control will be described below.

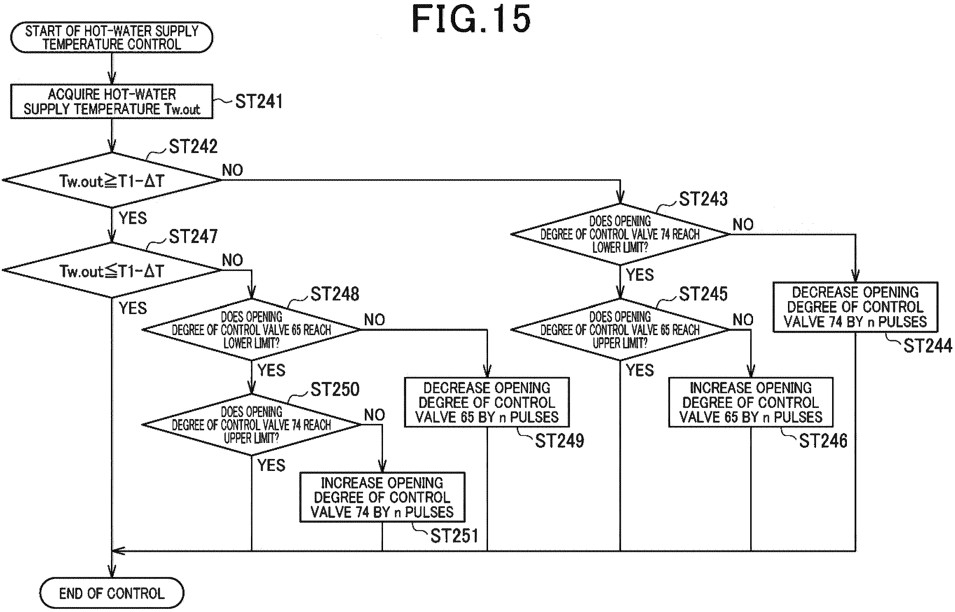

Fig. 15 is a flowchart illustrating an operation of the hot-water supply temperature control in the seventh embodiment.

As illustrated in Fig. 15, the control unit 91 acquires a hot-water supply temperature Tw.out from the hot-water supply temperature sensor 90 (ST241).

The control unit 91 determines whether the hot-water supply temperature Tw.out is equal to or higher than the value (set temperature for hot-water supply T1 - set temperature difference ΔT) (ST242).

When determining that the hot-water supply temperature Tw.out is not equal to or higher than the value (T1 - ΔT) (ST242: NO), the control unit 91 determines whether the opening degree of the first bypass control valve 74 reaches the lower limit (ST243).

When determining that the opening degree of the first bypass control valve 74 does not reach the lower limit (ST243: NO), the control unit 91 controls the opening degree of the first bypass control valve 74 to decrease the opening degree by n pulses (ST244). Then, the hot-water supply temperature control ends.

When determining that the opening degree of the first bypass control valve 74 reaches the lower limit (ST243: YES), the control unit 91 determines whether the opening degree of the flow rate regulating mechanism 65 reaches the upper limit (ST245).

When determining that the opening degree of the flow rate regulating mechanism 65 does not reach the upper limit (ST245: NO), the control unit 91 controls the opening degree of the flow rate regulating mechanism 65 to increase the opening degree by n pulses (ST246).

When determining that the opening degree of the flow rate regulating mechanism 65 reaches the upper limit (ST245: YES), the control unit 91 ends the control.

When determining that the hot-water supply temperature Tw.out is equal to or higher than the value (T1 - ΔT) (ST242: YES), the control unit 91 determines whether the hot-water supply temperature Tw.out is equal to lower than the value (set temperature for hot-water supply T1 + set temperature difference ΔT) (ST247).

When determining that the hot-water supply temperature Tw.out is not equal to or lower than the value (set temperature for hot-water supply T1 + set temperature difference ΔT) (ST247: NO), the control unit 91 determines whether the opening degree of the flow rate regulating mechanism 65 reaches a lower limit (ST248).

When determining that the opening degree of the flow rate regulating mechanism 65 does not reach the lower limit (ST248: NO), the control unit 91 controls the opening degree of the flow rate regulating mechanism 65 to decrease the opening degree by n pulses (ST249). Then, the control unit 91 ends the hot-water supply temperature control.

When determining that the opening degree of the fourth bypass control valve 87 reaches the lower limit (ST248: YES), the control unit 91 determines whether the opening degree of the first bypass control valve 74 reaches an upper limit (ST250).

When determining that the opening degree of the first bypass control valve 74 does not reach the upper limit (ST250: NO), the control unit 91 controls the opening degree of the first bypass control valve 74 to increase the opening degree by n pulses (ST251).

When determining that the opening degree of the first bypass control valve 74 reaches the upper limit (ST250: YES), the control unit 91 ends the hot-water supply temperature control.

The cooling capacity control B will be described below.

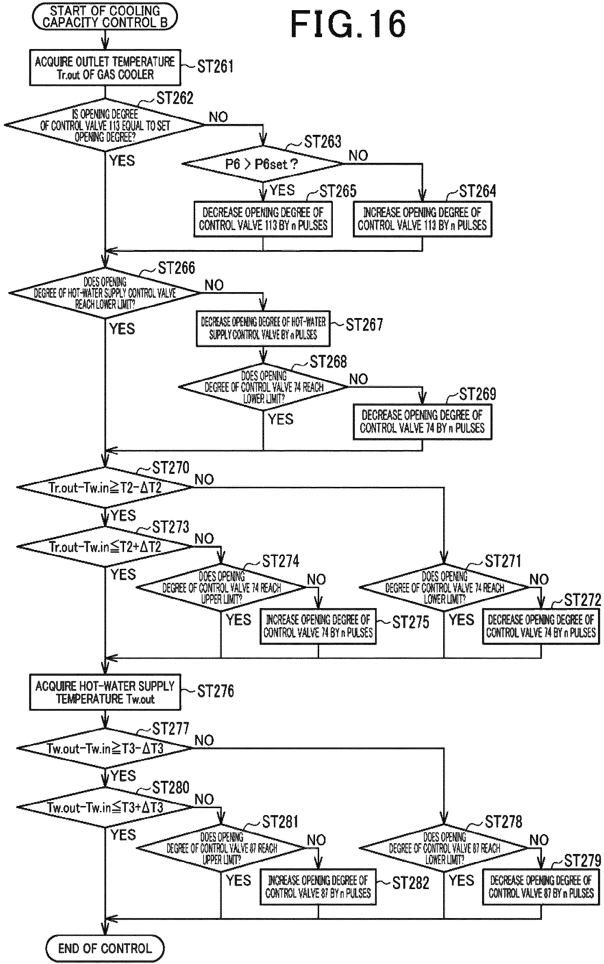

Fig. 16 is a flowchart illustrating an operation of the cooling capacity control B in the seventh embodiment.

As illustrated in Fig. 16, when the cooling capacity control B is performed, the control unit 91 acquires the refrigerant outlet temperature Tr.out of the auxiliary gas cooler 25 from the refrigerant outlet temperature sensor 93 (ST261), and determines whether the opening degree of the sixth bypass control valve 113 is equal to the set opening degree (ST262).

When determining that the opening degree of the sixth bypass control valve 113 is not equal to the set opening degree (ST262: NO), the control unit 91 determines whether the opening degree P6 of the sixth bypass control valve 113 is larger than the set opening degree P6set (ST263).

When determining that the opening degree P6 of the sixth bypass control valve 113 is smaller than the set opening degree P6set (ST263: NO), the control unit 91 controls the opening degree of the sixth bypass control valve 113 to increase the opening degree by n pulses (ST264).

When determining that the opening degree P6 of the sixth bypass control valve 113 is larger than the set opening degree P6set (ST263: YES), the control unit 91 controls the opening degree of the sixth bypass control valve 113 to decrease the opening degree by n pulses (ST265).

When determining that the opening degree of the sixth bypass control valve 113 is equal to the set opening degree (ST262: YES), the control unit 91 determines whether the opening degree of the hot-water supply control valve 75 reaches the lower limit (ST266).

When determining that the opening degree of the hot-water supply control valve 75 does not reach the lower limit (ST266: NO), the control unit 91 controls the opening degree of the hot-water supply control valve 75 to decrease the opening degree by n pulses (ST267). Then, the control unit 91 determines whether the opening degree of the first bypass control valve 74 reaches a lower limit (ST268). When determining that the opening degree of the first bypass control valve 74 does not reach the lower limit (ST268: NO), the control unit 91 controls the opening degree of the first bypass control valve 74 to decrease the opening degree by n pulses (ST269).

When determining that the opening degree of the hot-water supply control valve 75 reaches the lower limit (ST266: YES), the control unit 91 determines whether a difference between the refrigerant outlet temperature Tr.out and the cooling water inlet temperature Tw.in is equal to or greater than a value (set temperature for cooling T2 - set temperature difference ΔT2) (ST270).

Then, when determining that the value (Tr.out - Tw.in) is not equal to or greater than the value (T2 - ΔT2) (ST270: NO), the control unit 91 determines whether the opening degree of the first bypass control valve 74 reaches the lower limit (ST271). When determining that the opening degree of the first bypass control valve 74 does not reach the lower limit (ST271: NO), the control unit 91 controls the opening degree of the first bypass control valve 74 to decrease the opening degree by n pulses (ST272).

When determining that the value (Tr.out - Tw.in) is equal to or greater than the value (T2 - ΔT2) (ST270: YES), the control unit 91 determines whether the value (Tr.out - Tw.in) is equal to or smaller than a value (T2 + ΔT2) (ST273).

Then, when determining that the value (Tr.out - Tw.in) is not equal to or smaller than the value (T2 + ΔT2) (ST273: NO), the control unit 91 determines whether the opening degree of the first bypass control valve 74 reaches an upper limit (ST274). When determining that the opening degree of the first bypass control valve 74 does not reach the upper limit (ST274: NO), the control unit 91 controls the opening degree of the first bypass control valve 74 to increase the opening degree by n pulses (ST275).

Subsequently, the control unit 91 acquires a hot-water supply temperature Tw.out from the hot-water supply temperature sensor 90 (ST276).

The control unit 91 determines whether a difference between the hot-water supply temperature Tw.out and the cooling water inlet temperature Tw.in is equal to or higher than a value (set temperature for heat radiation T3 - set temperature difference ΔT3) (ST277).

When determining that the difference between the hot-water supply temperature Tw.out and the cooling water inlet temperature Tw.in is not equal to or higher than the value (T3 - ΔT3) (ST277: NO), the control unit 91 determines whether the opening degree of the flow rate regulating mechanism 65 reaches a lower limit (ST278).

When determining that the opening degree of the flow rate regulating mechanism 65 does not reach the lower limit (ST278: NO), the control unit 91 controls the opening degree of the flow rate regulating mechanism 65 to decrease the opening degree by n pulses (ST279). Then, the control unit 91 ends the control of the cooling capacity control B.

On the other hand, when determining that the difference between the hot-water supply temperature Tw.out and the cooling water inlet temperature Tw.in is equal to or higher than the value (T3 - ΔT3) (ST277: YES), the control unit 91 determines whether the difference between the hot-water supply temperature Tw.out and the cooling water inlet temperature Tw.in is equal to or lower than a value (set temperature for hot-water supply T3 + set temperature difference ΔT3) (ST280).

When determining that the difference between the hot-water supply temperature Tw.out and the cooling water inlet temperature Tw.in is not equal to or lower than the value (T3 + ΔT3) (ST280: NO), the control unit 91 determines whether the opening degree of the flow rate regulating mechanism 65 reaches an upper limit (ST281). Then, when determining that the opening degree of the flow rate regulating mechanism 65 does not reach the upper limit (ST281: NO), the control unit 91 controls the opening degree of the flow rate regulating mechanism 65 to increase the opening degree by n pulses (ST282). When determining that the opening degree of the flow rate regulating mechanism 65 reaches the upper limit (ST281: YES), the control unit 91 ends the control of the cooling capacity control B.

The opening degree of the control valve is represented by n pulses and an arbitrary opening degree in the control flow of the present embodiment, but, during the control of a plurality of control valves, different opening degrees or the same opening degree may be set for individual control valves.

In the present embodiment, the water flow rate through the sixth bypass passage 112 from the auxiliary gas cooler 25 can be controlled by the control of the opening degree of the sixth bypass control valve 113.

As a result, when the water flow rate through the water passage of the gas cooler unit 20 increases, the water flows to the main gas cooler 24 by bypassing the intercooler 23, and thus pressure loss in the water passage of the gas cooler unit 20 can be reduced. In addition, since the pressure loss in the water passage can be reduced, the refrigeration apparatus can be operated in a state where an input of the water supply pump 43 is small, and can be operated with high efficiency even when the hot-water supply temperature to be required changes and the setting of the flow rate changes.

Further, the control unit 91 can regulate the hot-water supply temperature by controlling the water flow rate through the main gas cooler 24 based on the value detected by the hot-water supply temperature sensor 90. Thereby, insufficient cooling of the refrigeration apparatus 1 is not caused, and the refrigeration apparatus 1 can be continuously operated while the hot-water supply temperature is maintained at a temperature close to the set temperature.

In the present invention, the water flow rate through the main gas cooler 24 is controlled based on the temperature detected by the hot-water supply temperature sensor 90, the cooling water temperature sensor 92, and the refrigerant outlet temperature sensor 93 which are provided in the gas cooler unit 20. However, the flow rate may be controlled using, for example, a refrigerator inlet temperature sensor 66, a refrigerator outlet temperature sensor 67, a discharge temperature sensor 68, a split heat exchanger outlet temperature sensor 69, or a pressure sensor which are provided in the compressor unit 10.

In the present embodiment, as described above, the sixth branch portion 110 is provided on the water pipe 40 between the auxiliary gas cooler 25 and the intercooler 23, the sixth joining portion 111 is provided on the water pipe 40 between the intercooler 23 and the main gas cooler 24, and the refrigeration apparatus 1 includes the sixth bypass passage 112 that branches at the sixth branch portion 110 and through which the water joining the sixth joining portion 111 flows and the sixth bypass control valve 113 that controls the water flow rate through the sixth bypass passage 112.

As a result, when the water flow rate through the water pipe 40 increases, the water flows by bypassing the intercooler 23, and thus pressure loss in the entire water passage can be reduced. In addition, since the pressure loss in the water passage can be reduced, the refrigeration apparatus can be operated in a state where an input of the water supply pump 43 is small, and can be operated with high efficiency even when the hot-water supply temperature to be required changes and the setting of the flow rate changes.

In the present embodiment, the water supply pump 43 is provided on the water passage between the intercooler 23 and the main gas cooler 24.

Also in the present embodiment, the suction tank 42 is installed on the upstream of the water supply pump 43, and thus it is possible to prevent unstable water supply due to occurrence of cavitation depending on a pressure drop in the element in front of the water supply pump 43 and to allow the water to stably flow onto the water passage.

Thus, since the water supply pump 43 is located in the water passage on the downstream of the auxiliary gas cooler 25, the temperature of the water entering the auxiliary gas cooler can be prevented from being raised due to the heat generated by the water supply pump, the temperature of the water entering the auxiliary gas cooler 25 can be lowered, and higher cooling capacity can be obtained. Further, since the water supply pump 43 is located downstream of the intercooler 23, the temperature of the water entering the intercooler 23 can also be lowered, the intercooler 23 can also cool the refrigerant at a lower temperature and can be operated under operation conditions with higher efficiency, and the amount of heat generated by the water supply pump 43 can be used for raising the temperature of the water.

An eighth embodiment of the present invention will be described below.

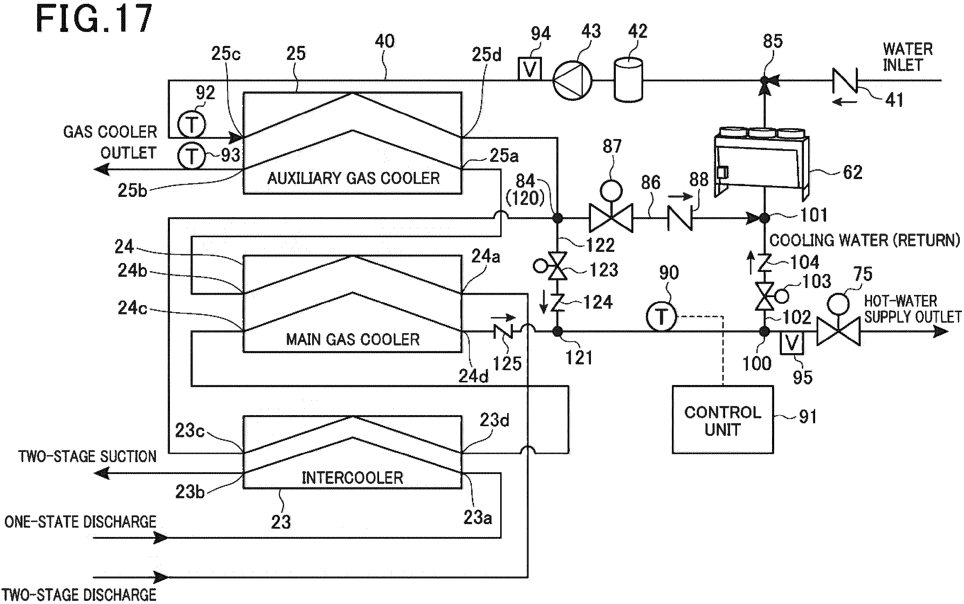

Fig. 17 is a circuit diagram of a gas cooler unit 20 according to the eighth embodiment of the present invention.

In the present embodiment, similarly to the sixth embodiment, a fourth branch portion 84 is provided on a water pipe 40 between an auxiliary gas cooler 25 and an intercooler 23. A fourth joining portion 85 is provided upstream of a main gas cooler bypass passage 64 from an external heat radiation apparatus 62.

A fourth bypass passage 86, which branches at the fourth branch portion 84 and through which water joining the fourth joining portion 85 flows, is connected to the fourth branch portion 84, and a fourth bypass control valve 87 is provided in the middle of the fourth bypass passage 86 to control a flow rate of water flowing through the fourth bypass passage 86.

A seventh branch portion 120 is provided on the water pipe 40 between the auxiliary gas cooler 25 and the intercooler 23, and a seventh joining portion 121 is provided downstream of the main gas cooler 24. Here, the fourth branch portion 84 and the seventh branch portion 120 may be shared as illustrated in Fig. 17, or may be provided separately.

A seventh bypass passage 122, which branches at the seventh branch portion 120 and through which water joining the seventh joining portion 121 flows, is connected to the seventh branch portion 120, and a seventh bypass control valve 123 is provided in the middle of the seventh bypass passage 122 to control a flow rate of water flowing through the seventh bypass passage 122.

Further, a check valve 124 for the seventh bypass passage is provided on the seventh bypass passage 122, and a main gas cooler outlet check valve 125 is provided on a water passage between the main gas cooler 24 and the seventh joining portion 121.

The seventh branch portion 120 is connected to the water pipe 40 in the present embodiment, but after the fourth branch portion 84 and the seventh branch portion 170 are separately provided, a three-way valve may be installed in the seventh branch portion 170 as the seventh bypass control valve 123 that controls the water flow rate through the seventh bypass passage 122, and the water flow rate through the seventh bypass passage 122 may be regulated by the three-way valve.

In the present embodiment, a hot-water supply temperature sensor 90 is provided downstream of the main gas cooler 24 and on the water pipe 40 downstream of the seventh joining portion 121 to detect a temperature of water for hot water supply. As described above, the hot-water supply temperature sensor 90 is provided downstream of the main gas cooler 24 and on the water pipe 40 downstream of the seventh joining portion 121, thereby being capable of grasping a temperature of water that is mixed with the water flowing through the seventh bypass passage 122 and discharged from the gas cooler unit 20.

In the present embodiment, the control unit 91 is also configured to control the water flow rate through the main gas cooler 24 and to regulate the hot-water supply temperature based on the temperature detected by the hot-water supply temperature sensor 90 and the set temperature for hot-water supply.

Since other configurations are the same as those in the respective embodiments described above, the same portions are denoted by the same reference numerals and the description thereof will not be presented.

An operation of the eighth embodiment will be described below.

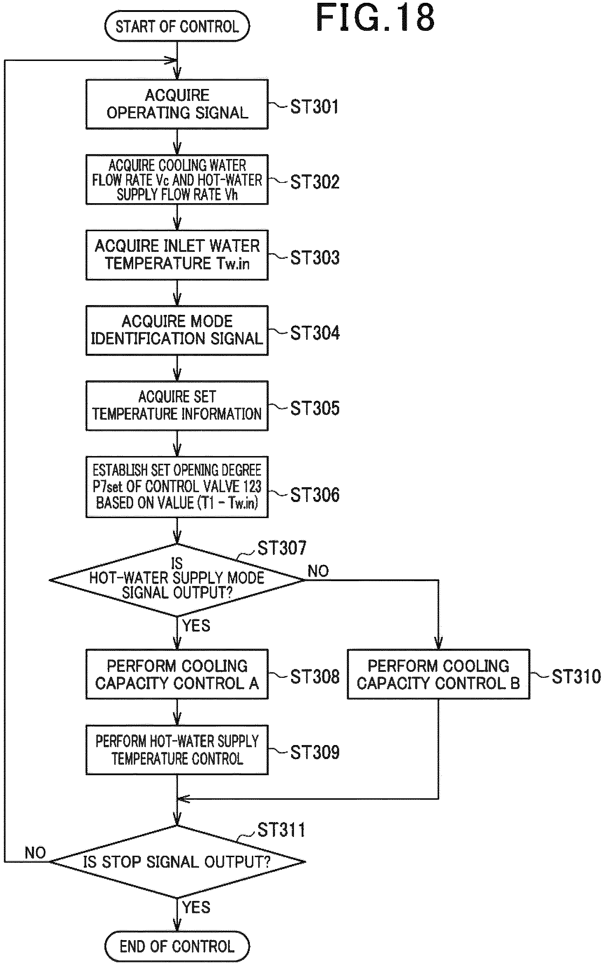

Fig. 18 is a flowchart illustrating control of the refrigeration apparatus according to the eighth embodiment.

As illustrated in Fig. 18, when acquiring an operating signal (ST301), the control unit 91 acquires a cooling water flow rate Vc from the cooling water flow meter 94 and a hot-water supply flow rate Vh from the hot-water supply flow meter 95 (ST302), and acquires a cooling water inlet temperature Tw.in from the cooling water temperature sensor 92 (ST303).

Then, the control unit 91 acquires a mode identification signal (ST304), acquires set temperature information (ST305), and establishes a set opening degree P7set of the seventh bypass control valve 123 based on a value (T1 - Tw.in) (ST306).

The control unit 91 determines whether a hot-water supply mode signal is output (ST307). When determining that there is the hot-water supply mode (ST307: YES), the control unit 91 performs cooling capacity control A (ST308) and also performs hot-water supply temperature control (ST309).

When determining that there is not the hot-water supply mode (ST307: NO), the control unit 91 determines that there is a refrigerating mode in which the efficiency of the refrigerator is emphasized and performs cooling capacity control B (ST310).

These cooling capacity control A, the hot-water supply temperature control, and the cooling capacity control B are performed until a stop signal is output (ST311).

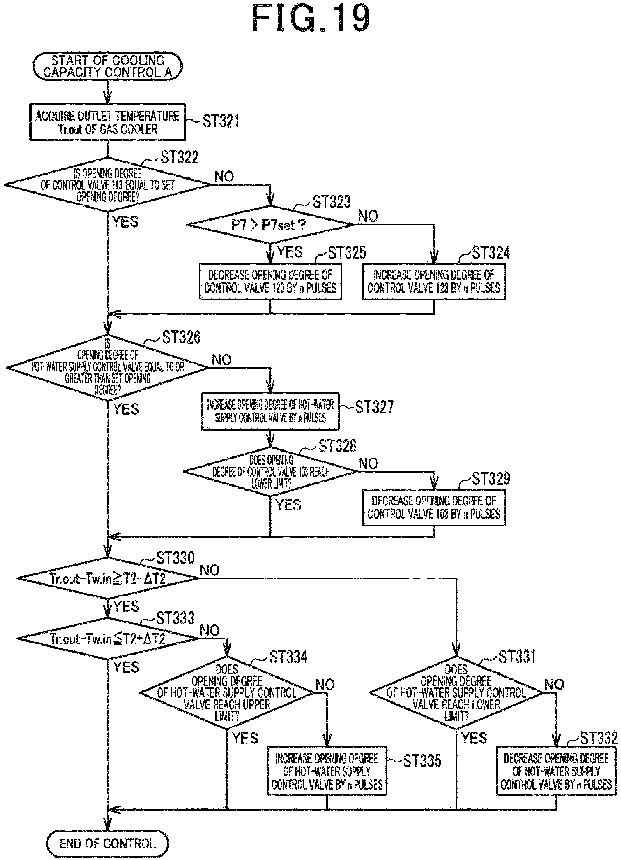

Fig. 19 is a flowchart illustrating an operation of the cooling capacity control A in the eighth embodiment.

As illustrated in Fig. 19, when performing the cooling capacity control A, the control unit 91 acquires a refrigerant outlet temperature Tr.out of the auxiliary gas cooler 25 from the refrigerant outlet temperature sensor 93 (ST321) and then determines whether the opening degree of the seventh bypass control valve 123 is equal to the set opening degree (ST322).

When determining that the opening degree of the seventh bypass control valve 123 is not equal to the set opening degree (ST322: NO), the control unit 91 determines whether an opening degree P7 of the seventh bypass control valve 123 is larger than the set opening degree P7set (ST323).

When determining that the opening degree P7 of the seventh bypass control valve 123 is smaller than the set opening degree P7set (ST323: NO), the control unit 91 controls the opening degree of the seventh bypass control valve 123 to increase the opening degree by n pulses (ST324).

When determining that the opening degree P7 of the seventh bypass control valve 123 is larger than the set opening degree P7set (ST323: YES), the control unit 91 controls the opening degree of the seventh bypass control valve 123 to decrease the opening degree by n pulses (ST325).

When determining that the opening degree of the seventh bypass control valve 123 is equal to the set opening degree (ST322: YES), the control unit 91 determines whether the opening degree of the hot-water supply control valve 75 is equal to or greater than the set opening degree (ST326).

When determining that the opening degree of the hot-water supply control valve 75 is not equal to or greater than the set opening degree (ST326: NO), the control unit 91 controls the opening degree of the hot-water supply control valve 75 to increase the opening degree by n pulses (ST327). Then, the control unit 91 determines whether the opening degree of the fifth bypass control valve 103 reaches a lower limit (ST328). When determining that the opening degree of the fifth bypass control valve 103 does not reach the lower limit (ST328: NO), the control unit 91 controls the opening degree of the fifth bypass control valve 103 to decrease the opening degree by n pulses (ST329).

When determining that the opening degree of the hot-water supply control valve 75 is equal to or greater than the set opening degree (ST326: YES), the control unit 91 determines whether a difference between the refrigerant outlet temperature Tr.out and the cooling water inlet temperature Tw.in is equal to or greater than a value (set temperature for cooling T2 - set temperature difference ΔT2) (ST330).

Then, when determining that the value (Tr.out - Tw.in) is not equal to or greater than the value (T2 - ΔT2) (ST330: NO), the control unit 91 determines whether the opening degree of the hot-water supply control valve 75 reaches the lower limit (ST331). When determining that the opening degree of the hot-water supply control valve 75 does not reach the lower limit (ST331: NO), the control unit 91 controls the opening degree of the hot-water supply control valve 75 to decrease the opening degree by n pulses (ST332). When the opening degree of the hot-water supply control valve 75 reaches the lower limit, the control of the cooling capacity control A ends.

When determining that the value (Tr.out - Tw.in) is equal to or greater than the value (T2 - ΔT2) (ST330: YES), the control unit 91 determines whether the value (Tr.out - Tw.in) is equal to or smaller than a value (T2 + ΔT2) (ST333).

Then, when determining that the value (Tr.out - Tw.in) is not equal to or smaller than the value (T2 + ΔT2) (ST333: NO), the control unit 91 determines whether the opening degree of the hot-water supply control valve 75 reaches an upper limit (ST334). When determining that the opening degree of the hot-water supply control valve 75 does not reach the upper limit (ST334: NO), the control unit 91 controls the opening degree of the hot-water supply control valve 75 to increase the opening degree by n pulses (ST335). When the opening degree of the hot-water supply control valve 75 reaches the upper limit (ST334: YES), the control of the cooling capacity control A ends.

The hot-water supply temperature control will be described below.

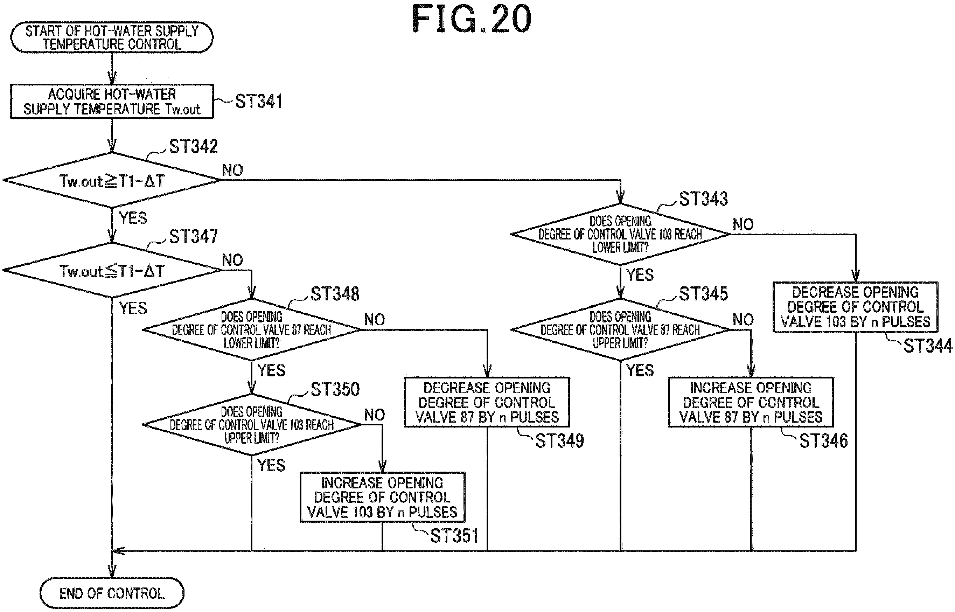

Fig. 20 is a flowchart illustrating an operation of the hot-water supply temperature control in the eighth embodiment.

As illustrated in Fig. 20, the control unit 91 acquires a hot-water supply temperature Tw.out from the hot-water supply temperature sensor 90 (ST341).

The control unit 91 determines whether the hot-water supply temperature Tw.out is equal to or higher than the value (set temperature for hot-water supply T1 - set temperature difference ΔT) (ST342).

When determining that the hot-water supply temperature Tw.out is not equal to or higher than the value (T1 - ΔT) (ST342: NO), the control unit 91 determines whether the opening degree of the fifth bypass control valve 103 reaches the lower limit (ST343).

When determining that the opening degree of the fifth bypass control valve 103 does not reach the lower limit (ST343: NO), the control unit 91 controls the opening degree of the fifth bypass control valve 103 to decrease the opening degree by n pulses (ST344). Then, the hot-water supply temperature control ends.

When determining that the opening degree of the fifth bypass control valve 103 reaches the lower limit (ST343: YES), the control unit 91 determines whether the opening degree of the fourth bypass control valve 87 reaches the upper limit (ST345).

When determining that the opening degree of the fourth bypass control valve 87 does not reach the upper limit (ST345: NO), the control unit 91 controls the opening degree of the fourth bypass control valve 87 to increase the opening degree by n pulses (ST346).

When determining that the opening degree of the fourth bypass control valve 87 reaches the upper limit (ST345: YES), the control unit 91 ends the hot-water supply temperature control.

When determining that the hot-water supply temperature Tw.out is equal to or higher than the value (T1 - ΔT) (ST342: YES), the control unit 91 determines whether the hot-water supply temperature Tw.out is equal to lower than the value (set temperature for hot-water supply T1 + set temperature difference ΔT) (ST347).

When determining that the hot-water supply temperature Tw.out is not equal to or lower than the value (set temperature for hot-water supply T1 + set temperature difference ΔT) (ST347: NO), the control unit 91 determines whether the opening degree of the fourth bypass control valve 87 reaches a lower limit (ST348).

When determining that the opening degree of the fourth bypass control valve 87 does not reach the lower limit (ST348: NO), the control unit 91 controls the opening degree of the fourth bypass control valve 87 to decrease the opening degree by n pulses (ST349). Then, the control unit 91 ends the hot-water supply temperature control.

When determining that the opening degree of the fourth bypass control valve 87 reaches the lower limit (ST348: YES), the control unit 91 determines whether the opening degree of the fifth bypass control valve 103 reaches an upper limit (ST350).

When determining that the opening degree of the fifth bypass control valve 103 does not reach the upper limit (ST350: NO), the control unit 91 controls the opening degree of the fifth bypass control valve 103 to increase the opening degree by n pulses (ST351).

When determining that the opening degree of the fifth bypass control valve 103 reaches the upper limit (ST350: YES), the control unit 91 ends the hot-water supply temperature control.

The cooling capacity control B will be described below.

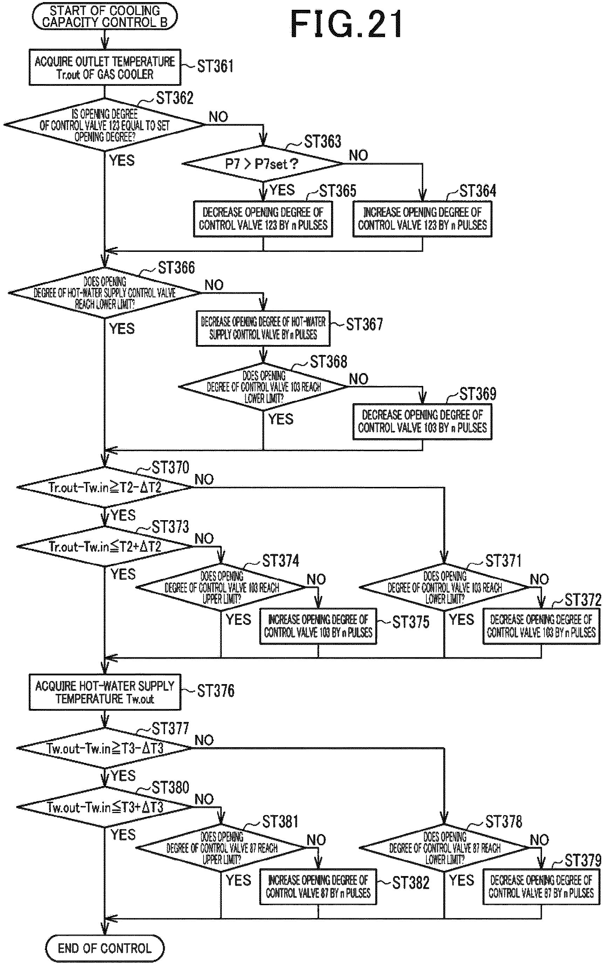

Fig. 21 is a flowchart illustrating an operation of the cooling capacity control B in the eighth embodiment.

As illustrated in Fig. 21, when the cooling capacity control B is performed, the control unit 91 acquires the refrigerant outlet temperature Tr.out of the auxiliary gas cooler 25 from the refrigerant outlet temperature sensor 93 (ST361), and determines whether the opening degree of the seventh bypass control valve 123 is equal to the set opening degree (ST362).

When determining that the opening degree of the seventh bypass control valve 123 is not equal to the set opening degree (ST362: NO), the control unit 91 determines whether the opening degree P7 of the seventh bypass control valve 123 is larger than the set opening degree P7set (ST363).

When determining that the opening degree P7 of the seventh bypass control valve 123 is smaller than the set opening degree P7set (ST363: NO), the control unit 91 controls the opening degree of the seventh bypass control valve 123 to increase the opening degree by n pulses (ST364).

When determining that the opening degree P7 of the seventh bypass control valve 123 is larger than the set opening degree P7set (ST363: YES), the control unit 91 controls the opening degree of the seventh bypass control valve 123 to decrease the opening degree by n pulses (ST365).

When determining that the opening degree of the seventh bypass control valve 123 is equal to the set opening degree (ST362: YES), the control unit 91 determines whether the opening degree of the hot-water supply control valve 75 reaches the lower limit (ST366).

When determining that the opening degree of the hot-water supply control valve 75 does not reach the lower limit (ST366: NO), the control unit 91 controls the opening degree of the hot-water supply control valve 75 to decrease the opening degree by n pulses (ST367). Then, the control unit 91 determines whether the opening degree of the fifth bypass control valve 103 reaches a lower limit (ST368). When determining that the opening degree of the fifth bypass control valve 103 does not reach the lower limit (ST368: NO), the control unit 91 controls the opening degree of the fifth bypass control valve 103 to decrease the opening degree by n pulses (ST369).

When determining that the opening degree of the hot-water supply control valve 75 reaches the lower limit (ST366: YES), the control unit 91 determines whether a difference between the refrigerant outlet temperature Tr.out and the cooling water inlet temperature Tw.in is equal to or greater than a value (set temperature for cooling T2 - set temperature difference ΔT2) (ST370).

Then, when determining that the value (Tr.out - Tw.in) is not equal to or greater than the value (T2 - ΔT2) (ST370: NO), the control unit 91 determines whether the opening degree of the fifth bypass control valve 103 reaches the lower limit (ST371). When determining that the opening degree of the fifth bypass control valve 103 does not reach the lower limit (ST371: NO), the control unit 91 controls the opening degree of the fifth bypass control valve 103 to decrease the opening degree by n pulses (ST372).

When determining that the value (Tr.out - Tw.in) is equal to or greater than the value (T2 - ΔT2) (ST370: YES), the control unit 91 determines whether the value (Tr.out - Tw.in) is equal to or smaller than a value (T2 + ΔT2) (ST373).

Then, when determining that the value (Tr.out - Tw.in) is not equal to or smaller than the value (T2 + ΔT2) (ST373: NO), the control unit 91 determines whether the opening degree of the fifth bypass control valve 103 reaches an upper limit (ST374). When determining that the opening degree of the fifth bypass control valve 103 does not reach the upper limit (ST374: NO), the control unit 91 controls the opening degree of the fifth bypass control valve 103 to increase the opening degree by n pulses (ST375).

Subsequently, the control unit 91 acquires a hot-water supply temperature Tw.out from the hot-water supply temperature sensor 90 (ST376).

The control unit 91 determines whether a difference between the hot-water supply temperature Tw.out and the cooling water inlet temperature Tw.in is equal to or higher than a value (set temperature for heat radiation T3 - set temperature difference ΔT3) (ST377).

When determining that the difference between the hot-water supply temperature Tw.out and the cooling water inlet temperature Tw.in is not equal to or higher than the value (T3 - ΔT3) (ST377: NO), the control unit 91 determines whether the opening degree of the fourth bypass control valve 87 reaches a lower limit (ST378).

When determining that the opening degree of the fourth bypass control valve 87 does not reach the lower limit (ST378: NO), the control unit 91 controls the opening degree of the fourth bypass control valve 87 to decrease the opening degree by n pulses (ST379). Then, the control unit 91 ends the control of the cooling capacity control B.

On the other hand, when determining that the difference between the hot-water supply temperature Tw.out and the cooling water inlet temperature Tw.in is equal to or higher than the value (T3 - ΔT3) (ST377: YES), the control unit 91 determines whether the difference between the hot-water supply temperature Tw.out and the cooling water inlet temperature Tw.in is equal to or lower than a value (set temperature for hot-water supply T3 + set temperature difference ΔT3) (ST380).

When determining that the difference between the hot-water supply temperature Tw.out and the cooling water inlet temperature Tw.in is not equal to or lower than the value (T3 + ΔT3) (ST380: NO), the control unit 91 determines whether the opening degree of the fourth bypass control valve 87 reaches an upper limit (ST381). Then, when determining that the opening degree of the fourth bypass control valve 87 does not reach the upper limit (ST381: NO), the control unit 91 controls the opening degree of the fourth bypass control valve 87 to increase the opening degree by n pulses (ST382). When determining that the opening degree of the fourth bypass control valve 87 reaches the upper limit (ST381: YES), the control unit 91 ends the control of the cooling capacity control B.

The opening degree of the control valve is represented by n pulses and an arbitrary opening degree in the control flow of the present embodiment, but, during the control of a plurality of control valves, different opening degrees or the same opening degree may be set for individual control valves.

In the present embodiment, the water flow rate through the fourth bypass passage 86 from the auxiliary gas cooler 25 can be controlled by the control of the opening degree of the fourth bypass control valve 87, and some of the water passed through the auxiliary gas cooler 25 pass through the external heat radiation apparatus 62 and then return to the water passage on the upstream of the auxiliary gas cooler 25.

Thus, the water flow rate through the auxiliary gas cooler 25, the intercooler 23, and the main gas cooler 24 can be individually controlled by the control of the fourth bypass control valve 87. For this reason, the cooling capacity of the refrigeration apparatus 1 can be regulated by the control of the water flow rate through the auxiliary gas cooler 25 and the hot-water supply temperature can also be regulated by the control of the water flow rate through the main gas cooler 24.

In addition, the water flow rate through the seventh bypass passage 122 from the auxiliary gas cooler 25 can be controlled by the control of the opening degree of the seventh bypass control valve 123.

As a result, when the water flow rate through the water pipe 40 increases, the water flows to the main gas cooler 24 by bypassing the intercooler 23, and thus pressure loss in the water passage of the gas cooler unit can be reduced. In addition, since the pressure loss in the water passage can be reduced, the refrigeration apparatus can be operated in a state where an input of the water supply pump 43 is small, and can be operated with high efficiency even when the hot-water supply temperature to be required changes and the setting of the flow rate changes.

Further, the control unit 91 can regulate the hot-water supply temperature by controlling the water flow rate through the main gas cooler 24 based on the value detected by the hot-water supply temperature sensor 90. Thereby, insufficient cooling of the refrigeration apparatus 1 is not caused, and the refrigeration apparatus 1 can be continuously operated while the hot-water supply temperature is maintained at a temperature close to the set temperature.

In the present invention, the water flow rate through the main gas cooler 24 is controlled based on the temperature detected by the hot-water supply temperature sensor 90, the cooling water temperature sensor 92, and the refrigerant outlet temperature sensor 93 which are provided in the gas cooler unit 20. However, the flow rate may be controlled using, for example, a refrigerator inlet temperature sensor 66, a refrigerator outlet temperature sensor 67, a discharge temperature sensor 68, a split heat exchanger outlet temperature sensor 69, or a pressure sensor which are provided in the compressor unit 10.

In the present embodiment, as described above, the seventh branch portion 120 is provided on the water pipe 40 between the auxiliary gas cooler 25 and the intercooler 23, the seventh joining portion 121 is provided on the water pipe 40 downstream of the main gas cooler 24, and the refrigeration apparatus 1 includes the seventh bypass passage 122 that branches at the seventh branch portion 120 and through which the water joining the seventh joining portion 121 flows and the seventh bypass control valve 123 that controls the water flow rate through the seventh bypass passage 122.

Thus, the water flow rate to the seventh bypass passage 122 from the auxiliary gas cooler 25 can be controlled by the control of the seventh bypass control valve 123. Further, when the water flow rate through the water pipe 40 increases, the water flows to the main gas cooler 24 by bypassing the intercooler 23, and thus pressure loss in the water passage of the gas cooler unit can be reduced. In addition, since the pressure loss in the water passage can be reduced, the refrigeration apparatus can be operated in a state where an input of the water supply pump 43 is small, and can be operated with high efficiency even when the hot-water supply temperature to be required changes and the setting of the flow rate changes.

The present invention is not limited to the above-described embodiments, and various changes can be made without departing from the scope of the present invention.

### [Industrial Applicability]

As described above, the refrigeration apparatus according to the present invention can be suitably used for a refrigeration apparatus in which the flow rate of water can be prevented from being reduced and the heat radiation of the refrigerant can be sufficiently generated in the intercooler and the gas cooler even when the hot-water supply temperature is increased, thereby the refrigerant temperature at the outlet of the refrigeration apparatus can also make low, and the cooling capacity of the refrigeration apparatus can be maintained. Furthermore, the refrigeration apparatus according to the present invention performs heat exchange between refrigerant and water and can also be suitably used for a hot-water supply heater or a hot water heater used for applications such as hot-water supply and hot-water heating using hot water generated by the heat exchange.

### [Reference Signs List]

- 1: refrigeration apparatus
- 10: compressor unit
- 11: compressor
- 12: low-stage suction port
- 13: low-stage discharge port
- 14: high-stage suction port
- 15: high-stage discharge port
- 16: intermediate receiver
- 17: decompression motor valve
- 20: gas cooler unit
- 23: intercooler
- 23a: inlet of one passage of intercooler
- 23b: outlet of one passage of intercooler
- 23c: inlet of the other passage of intercooler
- 23d: outlet of the other passage of intercooler
- 24: main gas cooler
- 24a: inlet of one passage of main gas cooler
- 24b: outlet of one passage of main gas cooler
- 24c: inlet of the other passage of main gas cooler
- 24d: outlet of the other passage of main gas cooler
- 25: auxiliary gas cooler
- 25a: inlet of one passage of auxiliary gas cooler
- 25b: outlet of one passage of auxiliary gas cooler
- 25c: inlet of the other passage of auxiliary gas cooler
- 25d: outlet of the other passage of auxiliary gas cooler
- 26: oil separator
- 26a: oil pipe
- 27: oil service valve
- 28: oil regulating motor valve
- 30: low-pressure refrigerant pipe
- 31: intermediate-pressure discharge pipe
- 32: intermediate-pressure suction pipe
- 33: high-pressure discharge pipe
- 34: refrigerant pipe
- 40: water pipe
- 41: water supply check valve
- 42: suction tank
- 43: water supply pump
- 44: check valve for main gas cooler bypass passage
- 45: check valve for first bypass passage
- 46: check valve for second bypass passage
- 50: split heat exchanger
- 50a: inlet of one passage of split heat exchanger
- 50b: outlet of one passage of split heat exchanger
- 50c: inlet of the other passage of split heat exchanger
- 50d: outlet of the other passage of split heat exchanger
- 51: branch pipe
- 52: liquid return motor valve
- 53: gas return motor valve
- 54: refrigerant return pipe
- 60: branch portion
- 61: joining portion
- 62: external heat radiation apparatus
- 63: main passage
- 64: main gas cooler bypass passage
- 65: flow rate regulating mechanism
- 66: refrigerator inlet temperature sensor
- 67: refrigerator outlet temperature sensor
- 68: discharge temperature sensor
- 69: split heat exchanger outlet temperature sensor
- 70: second branch portion
- 71: second joining portion
- 72: hot-water supply passage
- 73: first bypass passage
- 74: first bypass control valve
- 75: hot-water supply control valve
- 80: third branch portion
- 81: third joining portion
- 82: second bypass passage
- 83: second bypass control valve
- 84: fourth branch portion
- 85: fourth joining portion
- 86: fourth bypass passage
- 87: fourth bypass control valve
- 88: check valve for fourth bypass passage
- 90: hot-water supply temperature sensor
- 91: control unit
- 92: cooling water temperature sensor
- 93: refrigerant outlet temperature sensor
- 94: cooling water flow meter
- 95: hot-water supply flow meter
- 100: fifth branch portion
- 101: fifth joining portion
- 102: fifth bypass passage
- 103: fifth bypass control valve
- 104: check valve for fifth bypass passage
- 110: sixth branch portion
- 111: sixth joining portion
- 112: sixth bypass passage
- 113: sixth bypass control valve
- 114: check valve for sixth bypass passage
- 115: intercooler outlet check valve
- 120: seventh branch portion
- 121: seventh joining portion
- 122: seventh bypass passage
- 123: seventh bypass control valve
- 124: check valve for seventh bypass passage
- 125: main gas cooler outlet check valve

## Claims

1. A refrigeration apparatus in which refrigerant is cooled by heat exchange between the refrigerant and water, and a water passage of the water for cooling the refrigerant is connected by a water pipe (40), the refrigeration apparatus **characterized by** comprising:
a compressor (11) that compresses refrigerant suctioned from a low-stage suction port (12) through an inlet of the refrigeration apparatus to discharge the refrigerant from a low-stage discharge port (13) and compresses refrigerant suctioned from a high-stage suction port (14) again to discharge the refrigerant from a high-stage discharge port (15);
an intercooler (23) that cools the refrigerant discharged from the low-stage discharge port;
a main gas cooler (24) that cools the refrigerant discharged from the high-stage discharge port; and
an auxiliary gas cooler (25) that cools the refrigerant passed through the main gas cooler, wherein
the water pipe is sequentially connected in series to the auxiliary gas cooler, the intercooler, and the main gas cooler.

2. The refrigeration apparatus according to claim 1, wherein
a branch portion (60) is provided in a middle of the water pipe between the intercooler and the main gas cooler, and
a joining portion (61) is provided on the water pipe upstream of the auxiliary gas cooler, the refrigeration apparatus including:
a main passage (63) that branches at the branch portion and through which water is supplied to the main gas cooler;
a main gas cooler bypass passage (64) that branches at the branch portion and through which water flowing by bypassing the main gas cooler joins the joining portion after passing through an external heat radiation apparatus; and
a flow rate regulating mechanism (65) that regulates a flow rate of water flowing through the main passage and the main gas cooler bypass passage.

3. The refrigeration apparatus according to claim 2, wherein
a second branch portion (70) is provided on the water pipe downstream of the main gas cooler, and
a second joining portion (71) is provided on the main gas cooler bypass passage upstream of the external heat radiation apparatus, the refrigeration apparatus including:
a first bypass passage (73) that branches at the second branch portion and through which water joining the second joining portion flows;
a hot-water supply passage (72) that branches at the second branch portion and through which hot water is supplied;
a first bypass control valve (73) that is provided on the first bypass passage to control a flow rate of water flowing through the first bypass passage; and
a hot-water supply control valve (74) that is provided on the hot-water supply passage to control a flow rate of water flowing through the hot-water supply passage.

4. The refrigeration apparatus according to claim 2, wherein
a third branch portion (80) is provided on the water pipe between the auxiliary gas cooler and the intercooler, and
a third joining portion (81) is provided upstream of the external heat radiation apparatus on the main gas cooler bypass passage, the refrigeration apparatus including:
a second bypass passage (82) that branches at the third branch portion and through which water joining the third joining portion flows; and
a second bypass control valve (83) that is provided on the second bypass passage to control a flow rate of water flowing through the second bypass passage.

5. The refrigeration apparatus according to claim 1, wherein
a fourth branch portion (84) is provided on the water pipe between the auxiliary gas cooler and the intercooler, and
a fourth joining portion (85) is provided on the water pipe upstream of the auxiliary gas cooler, the refrigeration apparatus including:
a fourth bypass passage (86) that branches at the fourth branch portion and through which branched water joins the fourth joining portion after passing through the external heat radiation apparatus; and
a fourth bypass control valve (87) that is provided on the fourth bypass passage to control a flow rate of water flowing through the fourth bypass passage.

6. The refrigeration apparatus according to claim 5, wherein
a fifth branch portion (100) is provided downstream of the main gas cooler, and
a fifth joining portion (101) is provided upstream of the fourth bypass passage from the external heat radiation apparatus, the refrigeration apparatus including:
a fifth bypass passage (102) that branches at the fifth branch portion and through which water joining the fifth joining portion flows; and
a fifth bypass control valve (103) that is provided on the fifth bypass passage to control a flow rate of water flowing through the fifth bypass passage.

7. The refrigeration apparatus according to any one of claims 1 to 6, wherein
a sixth branch portion (110) is provided on the water pipe between the auxiliary gas cooler and the intercooler, and
a sixth joining portion (111) is provided on the water pipe between the intercooler and the main gas cooler, the refrigeration apparatus including:
a sixth bypass passage (112) that branches at the sixth branch portion and through which water joining the sixth joining portion flows; and
a sixth bypass control valve (113) that is provided on the sixth bypass passage to control a flow rate of water flowing through the sixth bypass passage.

8. The refrigeration apparatus according to any one of claims 1 to 5, wherein
a seventh branch portion (120) is provided on the water pipe between the auxiliary gas cooler and the intercooler, and
a seventh joining portion (121) is provided on the water pipe downstream of the main gas cooler, the refrigeration apparatus including:
a seventh bypass passage (122) that branches at the seventh branch portion and through which water joining the seventh joining portion flows; and
a seventh bypass control valve (123) that is provided on the seventh bypass passage to control a flow rate of water flowing through the seventh bypass passage.

9. The refrigeration apparatus according to any one of claims 2 to 8, further comprising:
a hot-water supply temperature sensor (90) that is provided on the water pipe downstream of the main gas cooler to detect a temperature of water for hot water supply; and
a control unit (91) that controls at least one of the flow rate regulating mechanism, the first bypass control valve, the fourth bypass control valve, and the fifth bypass control valve, based on a hot-water supply temperature detected by the hot-water supply temperature sensor, wherein
the control unit controls a flow rate of water flowing through the main gas cooler based on the temperature detected by the hot-water supply temperature sensor and a set temperature for hot-water supply.

10. The refrigeration apparatus according to any one of claims 1 to 9, wherein
a water supply pump (43) is provided on the water passage between the auxiliary gas cooler and the intercooler.

11. The refrigeration apparatus according to any one of claims 1 to 9, wherein
a water supply pump (43) is provided on the water passage between the intercooler and the main gas cooler.

12. The refrigeration apparatus according to any one of claims 1 to 11, wherein
a carbon dioxide is used as the refrigerant.
